# EUROPEAN PATENT SPECIFICATION

(11) **EP 2 045 597 B1**
(45) Date of publication and mention of the grant of the patent: **24.04.2013**
(21) Application number: 07830023.3
(22) Date of filing: 17.10.2007
(51) Int. Cl.: G01N 27/416, G01N 27/28, G01N 27/327, G01N 33/49

(54) **Method for measuring hematocrit value of blood sample, method for measuring concentration of analyte in blood sample, sensor chip and sensor unit**
Verfahren zur Messung des Hämatokritwertes einer Blutprobe, Verfahren zur Messung der Analytkonzentration in einer Blutprobe, Sensorchip und Sensoreinheit
Procédé de mesure de valeur hématocrit de prélèvement sanguin, procédé de mesure de concentration d'analyte dans un prélèvement sanguin, puce de capteur et unité de détection

(30) Priority: 19.10.2006 JP 2006285025; 19.10.2006 JP 2006285026
(43) Date of publication of application: 08.04.2009
(73) Proprietor: Panasonic Corporation, Kadoma-shi Osaka 571-8501 (JP)
(72) Inventor: FUJIWARA, Masaki, Chuo-ku, Osaka, 540-6207 (JP); TAKASU, Takahiro, Chuo-ku, Osaka, 540-6207 (JP); IKEDA, Shin, Chuo-ku, Osaka, 540-6207 (JP); NAKAMINAMI, Takahiro, Chuo-ku, Osaka, 540-6207 (JP)
(74) Representative: Eisenführ, Speiser & Partner
(86) International application number: PCT/JP2007/070289
(87) International publication number: WO 2008/047842

(56) References cited:
- EP-A1- 1 707 953
- EP-A2- 1 447 665
- WO-A1-2005/054839
- WO-A1-2005/054840
- WO-A2-01/57510
- JP-A- 01 026 157
- JP-A- 03 099 254
- JP-A- 08 500 190
- JP-A- 11 101 771
- JP-A- 11 118 794
- JP-A- 2004 069 582
- US-A1- 2002 048 532

## Description

### Technical Field

The present invention relates to a method for measuring a hematocrit (Hct) value of a blood sample, a method for measuring a concentration of an analyte in a blood sample, and a sensor chip and a sensor unit suited for such measurements.

### Background Art

Sensor chips have been used for the measurement of an analyte concentration in a blood sample, for example, such as a blood glucose concentration (blood sugar level).

The sensor chip measures the amount of current flowing in the blood sample after an enzymatic cycling reaction involving an analyte, and a concentration of the analyte is calculated based on the measured current amount. The amount of current varies not only with the analyte concentration but the Hct value of the blood sample. The Hct value of the blood sample varies according to the physical condition of the animal from which the blood sample is drawn. In humans, the Hct value is normally 39% to 50% for adult males, and 36% to 45% for adult females. It is therefore desirable that the Hct value of the blood sample also be measured by the sensor chip in order to specify accurately the analyte concentration in the blood sample, and to find the attributes of the blood sample, for example, such as blood viscosity and anemia.

Sensor chips for measuring the Hct value of a blood sample are disclosed in JP8(1996)-500190T, JP2003-501627T, a pamphlet of International Publication 2005/054839, and a pamphlet of International Publication 2005/054840. These known sensor chips include an electrode system equipped with a working electrode and a counter electrode, and a channel (blood sample holder) for holding a blood sample between the working electrode and the counter electrode.

In the sensor chips of the JP8(1996)-500190T and the JP2003-501627T, an electron mediator is disposed on the blood sample holder to be dissolved by a blood sample. The electron mediator adheres to the working and counter electrodes when the blood sample is introduced into the blood sample holder, involving in movement of electrons at the interface of the blood sample and each of the electrodes. In these sensor chips, the Hct value of the blood sample is specified by measuring the amount of current that flows in the blood sample as a result of a redox reaction of the electron mediator adhering to the electrodes.

In the sensor chips described in the pamphlet of International Publication 2005/054839 and the pamphlet of International Publication 2005/054840, the electron mediator is disposed only on the counter electrode of the electrode system including the working and counter electrodes for measuring a Hct value. In these sensor chips, a pure blood sample not containing the electron mediator contacts the working electrode following introduction of the blood sample into the blood sample holder. In the sensor chips, movement of electrons occurs at the interface of the blood sample and the working electrode as a result of a redox reaction of the blood components in the blood sample, for example, such as ascorbic acid, uric acid, and water. The electron mediator disposed on the counter electrode is involved in the movement of electrons at the interface of the blood sample and the counter electrode.

### Disclosure of Invention

In the sensor chips described in JP8(1996)-500190T and JP2003-501627T, the amount of current (redox current) that flows in the blood sample in the measurement of Hct value varies only slightly with respect to a rate of change of the Hct value of the blood sample. Accordingly, the detection sensitivity is not sufficient in these sensor chips. For example, in some cases, a change in amplitude of the redox current is only about 8% when a change in Hct value of the blood sample is 20%. In the sensor chips described in the pamphlet of International Publication 2005/054839 and the pamphlet of International Publication 2005/054840, the amplitude of the redox current fluctuates over a wide range when the voltage (Hct value measuring voltage) applied across the working electrode and the counter electrode in the measurement of Hct value is decreased, and a stable Hct measurement in the blood sample is not possible in some cases.

An object of the present invention is to provide a method for measuring a Hct value of a blood sample, a method for measuring a concentration of an analyte in a blood sample, and a sensor chip and a sensor unit suited for such measurements, that are capable of stably measuring the Hct value of the blood sample with sufficient detection sensitivity even at a low Hct value measuring voltage.

Generally, metal that readily undergoes electrolytic oxidation, for example, silver, copper, and nickel, is thought to be unsuitable as a material for working electrodes of sensor chips. It has been assumed that a precise measurement of the amount of current reflecting the analyte concentration is deteriorated due to an excess oxidization of the working electrode induced by a voltage application to the electrode system of the sensor chip. The inventors of the present invention focused their attentions on the fact that when the working electrode of the sensor chip is composed of a material including metal that readily undergoes electrolytic oxidation, an oxidation current derived from the oxidation of the metal is provided through a voltage application across the working electrode serving as the anode and the counter electrode serving as the cathode. And the inventors found that an arrangement of an oxidant of a redox substance specifically on the counter electrode prevents the oxidation reaction of the metal that readily undergoes electrolytic oxidation in the working electrode from being saturated, and stabilizes the oxidation current. The inventors completed the present invention based on this knowledge.

The present invention provides a method for electrochemically measuring a hematocrit value of a blood sample, the method including: applying a voltage across a working electrode and a counter electrode in contact with the blood sample while an oxidant of a redox substance is in contact with the counter electrode and is not substantially in contact with the working electrode; detecting a resulting current flowing between the working electrode and the counter electrode; and calculating a hematocrit value of the blood sample based on the current. At least part of a surface of the working electrode is in contact with the blood sample and is composed of a material including metal that readily undergoes electrolytic oxidation. The voltage applied across the working electrode and the counter electrode causes reduction of the oxidant and oxidation of the metal that readily undergoes electrolytic oxidation. The current is detected by measuring a current that results from the oxidation and the reduction.

In another aspect, the present invention provides a method for electrochemically measuring a concentration of an analyte in a blood sample, the method including: electrochemically detecting a current A reflecting a Hct value of the blood sample so as to obtain data A representing the current A or an equivalent of the current A and corresponding to the Hct value; electrochemically detecting a current B that results from the oxidation or reduction of the analyte in the blood sample caused, in the presence of a redox substance, by a redox enzyme that uses the analyte as a substrate, so as to obtain data B representing the current B or an equivalent of the current B; and determining a concentration of the analyte in the blood sample based on data C obtained by correcting the data B using the data A. A voltage is applied across the working electrode and the counter electrode in contact with the blood sample while an oxidant of the redox substance is in contact with the counter electrode and is substantially not in contact with at least part of a surface of the working electrode. The voltage causes reduction of the oxidant and oxidation of metal that readily undergoes electrolytic oxidation forming the at least part of the surface of the working electrode, and then the current A is detected by measuring a current flowing between the working electrode and the counter electrode that results from the oxidation and the reduction.

In another aspect, the present invention provides a sensor chip including a Hct value analyzer that electrochemically detects a current reflecting a Hct value of a blood sample. The Hct value analyzer includes: a working electrode and a counter electrode; a blood sample holder for holding the blood sample in contact with the working electrode and the counter electrode; and a blood sample inlet through which the blood sample is introduced into the blood sample holder. At least part of a surface of the working electrode facing the blood sample holder is composed of a material including metal that readily undergoes electrolytic oxidation. An oxidant of a redox substance is disposed in contact with a surface of the counter electrode facing the blood sample holder or is disposed in the vicinity of the surface of the counter electrode. In another aspect, the present invention provides a sensor chip including a Hct value analyzer that electrochemically detects a current reflecting a Hct value of a blood sample. The Hct value analyzer includes: a working electrode and a counter electrode; a blood sample holder for holding the blood sample in contact with the working electrode and the counter electrode; and a blood sample inlet through which the blood sample is introduced into the blood sample holder. The blood sample holder includes an inlet portion in communication with the blood sample inlet, and a first and a second branch portion branching out of the inlet portion. The first branch portion faces the counter electrode, and the second branch portion faces the working electrode. At least part of a surface of the working electrode facing the second branch portion is composed of a material including metal that readily undergoes electrolytic oxidation. An oxidant of a redox substance is disposed at the first branch portion while being in contact with a surface of the counter electrode facing the first branch portion or while being separated from the surface of the counter electrode.

Further, in another aspect, the present invention provides a sensor unit including the sensor chip, and a sensor main body including a voltage applying circuit for applying a predetermined voltage across the working electrode and the counter electrode. The sensor chip is detachable with respect to the sensor main body, and the voltage applying circuit is capable of applying a predetermined voltage across the working electrode and the counter electrode with the sensor chip attached to the sensor main body. The predetermined voltage is 3.0 V or less, when the working electrode is anode and the counter electrode is cathode.

According to the present invention, the Hct value of the blood sample stably can be measured with sufficient detection sensitivity, even at a low Hct value measuring voltage.

### Brief Description of the Drawings

FIG. 1 is an exploded perspective view showing an example of a sensor chip for measuring a Hct value of the present invention.
FIG. 2 is a plan view showing an example of a sensor chip for measuring a Hct value of the present invention.
FIG. 3 is an exploded perspective view showing another example of a sensor chip for measuring a Hct value of the present invention.
FIG. 4 is a plan view showing another example of a sensor chip for measuring a Hct value of the present invention.
FIG. 5 is an exploded perspective view showing another example of a sensor chip for measuring a Hct value of the present invention.
FIG. 6 is a plan view showing another example of a sensor chip for measuring a Hct value of the present invention.
FIG. 7 is a graph representing an example of measurement results of Hct value by a sensor chip of Example 1.
FIG. 8 is a graph representing another example of measurement results of Hct value by the sensor chip of Example 1.
FIG. 9 is a graph representing another example of measurement results of Hct value by the sensor chip of Example 1.
FIG. 10 is a graph representing another example of measurement results of Hct value by the sensor chip of Example 1.
FIG. 11 is a graph representing another example of measurement results of Hct value by the sensor chip of Example 1.
FIG. 12 is a graph representing another example of measurement results of Hct value by the sensor chip of Example 1.
FIG. 13 is a graph representing another example of measurement results of Hct value by the sensor chip of Example 1.
FIG. 14 is a graph representing an example of measurement results of Hct value by a sensor chip of Example 2.
FIG. 15 is a graph representing another example of measurement results of Hct value by the sensor chip of Example 2.
FIG. 16 is a graph representing another example of measurement results of Hct value by the sensor chip of Example 2.
FIG. 17 is a graph representing another example of measurement results of Hct value by the sensor chip of Example 2.
FIG. 18 is a graph representing another example of measurement results of Hct value by the sensor chip of Example 2.
FIG. 19 is a graph representing another example of measurement results of Hct value by the sensor chip of Example 2.
FIG. 20 is a graph representing another example of measurement results of Hct value by the sensor chip of Example 2.
FIG. 21 is a graph representing another example of measurement results of Hct value by the sensor chip of Example 2.
FIG. 22 is a graph representing another example of measurement results of Hct value by the sensor chip of Example 2.
FIG. 23 is a graph representing another example of measurement results of Hct value by the sensor chip of Example 2.
FIG. 24is a graph representing an example of measurement results of Hct value by a sensor chip of Example 3.
FIG. 25 is a graph representing another example of measurement results of Hct value by the sensor chip of Example 3.
FIG. 26 is a graph representing another example of measurement results of Hct value by the sensor chip of Example 3.
FIG. 27 is a graph representing another example of measurement results of Hct value by the sensor chip of Example 3.
FIG. 28 is a graph representing another example of measurement results of Hct value by the sensor chip of Example 3.
FIG. 29 is a graph representing an example of measurement results of Hct value by a sensor chip of Example 4.
FIG. 30 is a graph representing another example of measurement results of Hct value by the sensor chip of Example 4.
FIG. 31 is a graph representing another example of measurement results of Hct value by the sensor chip of Example 4.
FIG. 32 is a graph representing another example of measurement results of Hct value by the sensor chip of Example 4.
FIG. 33 is a graph representing another example of measurement results of Hct value by the sensor chip of Example 4.
FIG. 34 is a graph representing another example of measurement results of Hct value by the sensor chip of Example 4.
FIG. 35 is a graph representing another example of measurement results of Hct value by the sensor chip of Example 4.
FIG. 36 is a graph representing another example of measurement results of Hct value by the sensor chip of Example 4.
FIG. 37 is a graph representing an example of measurement results of Hct value by a sensor chip of Comparative Example 1.
FIG. 38 is a graph representing another example of measurement results of Hct value by the sensor chip of Comparative Example 1.
FIG. 39 is a graph representing another example of measurement results of Hct value by the sensor chip of Comparative Example 1.
FIG. 40 is a graph representing an example of measurement results of Hct value by a sensor chip of Comparative Example 2.
FIG. 41 is a perspective view showing an example of a sensor unit for measuring a Hct value of the present invention.
FIG. 42 is a diagram showing an example of a circuit structure of a sensor unit for measuring a Hct value of the present invention.
FIG. 43 is an exploded perspective view showing an example of a sensor chip for measuring an analyte concentration of the present invention.
FIG. 44 is a plan view showing an example of a sensor chip for measuring an analyte concentration of the present invention.
FIG. 45 is an exploded perspective view showing another example of a sensor chip for measuring an analyte concentration of the present invention.
FIG. 46 is a plan view showing another example of a sensor chip for measuring an analyte concentration of the present invention.
FIG. 47 is an exploded perspective view showing another example of a sensor chip for measuring an analyte concentration of the present invention.
FIG. 48 is a plan view showing another example of a sensor chip for measuring an analyte concentration of the present invention.
FIG. 49 is a diagram showing an example of a circuit structure of a sensor unit for measuring an analyte concentration of the present invention.

### Best Mode for Carrying Out the Invention

In a measurement of Hct value by the present invention, the contact pattern of an oxidant and electrodes is controlled such that the oxidant of the redox substance is in contact with a counter electrode but is substantially not in contact with a working electrode.

The oxidant of the redox substance being in contact with the counter electrode may be a state in which, for example, a blood sample containing the oxidant is in contact with the counter electrode, or a state in which, for example, the oxidant is disposed on the counter electrode. That is, in the measurement of Hct value, the oxidant may be in contact with the electrodes by being dissolved in the blood sample, or by being provided as a solid.

The oxidant is a substance that undergoes electrochemical reduction at the counter electrode in response to an applied voltage of 3.0 V or less, when the working electrode is the anode and the counter electrode is the cathode. Examples of the oxidant include oxidants of reversible electroactive compounds such as ferricyanides, p-benzoquinone, p-benzoquinone derivative, oxidized phenazine methosulfate, methylene blue, ferricinium, and ferricinium derivative. The oxidant is preferably a ferricyanide, which is preferably potassium ferricyanide.

The amount of oxidant in contact with the counter electrode in the measurement of Hct value may be controlled by adding, for example, a 0.1 to 1000 mM, 1 to 500 mM, or in some cases, 10 to 200 mM of oxidant to the blood sample brought into contact with the counter electrode.

In the measurement of Hct value, the oxidant of the redox substance intrinsically contained in the blood sample (for example, human blood) is disregarded as the oxidant of the redox substance in contact with the working electrode. In other words, in this specification, the redox substance intrinsically contained in the blood sample is regarded as being substantially not in contact with the electrodes (working electrode and counter electrode). Further, in this specification, a blood sample containing the redox substance in an amount comparable to that intrinsically contained in human blood is regarded as being substantially not containing the redox substance.

At least part of a surface of the working electrode is composed of a material including metal that readily undergoes electrolytic oxidation, and the at least part of the surface is in contact with a blood sample in the measurement of Hct value. The metal that readily undergoes electrolytic oxidation is a metal having a standard electrode potential (V vs. SHE) equal to or less than the standard electrode potential of silver (0.799 V vs. SHE), as represented by at least one selected from silver, copper, and nickel, for example. The at least part of the surface of the working electrode may be formed using the metal that readily undergoes electrolytic oxidation individually or in a combination of two or more kinds, or using a material obtained by mixing the metal that readily undergoes electrolytic oxidation and a conductive material other than the metal that readily undergoes electrolytic oxidation.

A surface of the counter electrode in contact with the blood sample in the measurement of Hct value can be composed of a conventional conductive material, such as palladium, platinum, gold, silver, titanium, copper, nickel, and carbon, for example. Or a polymer film may be formed, for example, on an electrode core of the counter electrode so that a surface of the polymer film serves as the above-mentioned surface of the counter electrode. Examples of the material of the polymer film include: carboxymethyl cellulose; hydroxyethyl cellulose; hydroxypropyl cellulose; methyl cellulose; ethyl cellulose; ethylhydroxyethyl cellulose carboxyethyl cellulose; polyvinyl alcohol; polyvinyl pyrrolidone; polyamino acid such as polylysine; polystyrene sulfonate; gelatin and a derivative thereof; polyacrylic acid and a salt thereof; polymethacrylic acid and a salt thereof; starch and a derivative thereof; maleic anhydride polymer and a salt thereof; and agarose gel and a derivative thereof. These compounds may be used either individually or in a combination of two or more kinds.

The shape and size of the working electrode and counter electrode are not particularly limited. The layout pattern of the working electrode and counter electrode on an insulating substrate is not particularly limited either. However, Hct value of a blood sample stably can be measured more easily when the closest distance between the working electrode and the counter electrode is 0.05 mm or greater, 0.1 mm or greater, or in some cases, 0.5 mm or greater. The upper limit of the closest distance is not particularly limited.

In the measurement of Hct value, a voltage of 3.0 V or less is applied across the working electrode and the counter electrode (Hct value measuring voltage), when the working electrode is the anode and the counter electrode is the cathode. In the present invention, the application of the Hct value measuring voltage across the working electrode and the counter electrode as the anode and the cathode, respectively, stably can produce a current associated with the oxidation of the metal that readily undergoes electrolytic oxidation contained in the working electrode and the reduction of the oxidant in contact with the counter electrode, immediately after the voltage application, even when the applied voltage is 3.0 V or less, or even 1.0 V or less. Though the reason for this is unclear, it appears to be due to the oxidation current that occurs solely by the solution reaction of the metal that readily undergoes electrolytic oxidation forming the at least part of the surface of the working electrode, and the gradual formation of an oxide film on the surface, in the measurement of Hct value.

The Hct value measuring voltage is applied for, for example, 0.001 to 60 seconds, preferably 0.01 to 10 seconds, more preferably 0.01 to 5 seconds, and even more preferably 0.01 to 3 seconds. The Hct value measuring voltage may be, for example, 0.75 V or less, 0.5 V or less, 0.25 V or less, 0.15 V or less, or 0.1 V or less, when the working electrode is the anode and the counter electrode is the cathode. The lower limit of the Hct value measuring voltage is not particularly limited as long as the metal that readily undergoes electrolytic oxidation is oxidized at the working electrode and the oxidant is reduced at the counter electrode. However, it is desirable that the Hct value measuring voltage exceeds 0 V and creates a positive potential at the working electrode, when the working electrode is the anode and the counter electrode is the cathode.

The Hct value of the blood sample is calculated based on the current that flows between the working electrode and the counter electrode by the application of the Hct value measuring voltage. The Hct value can be calculated, for example, by referring to a standard curve or a standard table relating Hct value to the amount of current after a predetermined time period from the application of the Hct value measuring voltage.

The Hct value described above can be measured using a sensor chip for measuring a Hct value, which is an example of a sensor chip of the present invention.

The sensor chip for measuring a Hct value includes a Hct value analyzer, which electrochemically detects a current reflecting the Hct value of the blood sample. The Hct value analyzer includes an electrode system having the working electrode and the counter electrode, and a blood sample holder used to hold a blood sample in contact with the working electrode and the counter electrode. The blood sample holder is in communication with a blood sample inlet through which a blood sample is introduced.

The working electrode and the counter electrode are disposed to at least partially face the blood sample holder, such that the working electrode and the counter electrode are in contact with the blood sample introduced into the blood sample holder.

At least part of the surface of the working electrode facing the blood sample holder is composed of a material including metal that readily undergoes electrolytic oxidation, as represented by silver, for example. The at least part of the surface may be, for example, a surface of an electrode core formed using the material including metal that readily undergoes electrolytic oxidation, or may be, for example, a surface of a conducting film containing the metal that readily undergoes electrolytic oxidation, the conductive film being formed on an electrode core formed using a conductive material other than the metal that readily undergoes electrolytic oxidation. Or instead of being formed using a material including metal that readily undergoes electrolytic oxidation, the at least part of the surface may be a surface of a polymer film formed on the electrode core formed using the material including metal that readily undergoes electrolytic oxidation. The polymer film can be formed using the same material as that of the polymer film that can be disposed on the electrode core of the counter electrode.

The surface of the counter electrode facing the blood sample holder may be, for example, the surface of the electrode core formed using a conventional conductive material, or the surface of the above-mentioned polymer film formed on the electrode core.

The electrode cores of the working electrode and the counter electrode can be formed, for example, by a screen printing method, a sputtering method, or a vapor-deposition method. The polymer film can be formed, for example, from a solution of polymer material for forming the film, by applying the solution on the electrode core and drying it. The shape and size of the working electrode and counter electrode, and the layout pattern of these electrodes on the insulating substrate are not particularly limited. However, the Hct value of the blood sample stably can be measured more easily when the closest distance between the working electrode and the counter electrode falls in the ranges exemplified above.

In the Hct value analyzer, when a blood sample is introduced into the blood sample holder and a voltage is applied across the working electrode and the counter electrode, the layout pattern of the reagents containing the oxidant, the shape of the blood sample holder, and the relative layout pattern of the counter electrode and the working electrode are set so that the oxidant of the redox substance is in contact with the counter electrode and is substantially not in contact with the working electrode, and that the blood sample is in contact with the counter electrode and the working electrode. For example, the working electrode is disposed on the upstream side of the counter electrode with respect to the flow of the blood sample introduced from the blood sample inlet into the blood sample holder, and the reagent containing the oxidant of the redox substance is disposed in contact with the surface of the counter electrode facing the blood sample holder or is disposed in the vicinity of the surface. The reagent is preferably disposed on or in contact with the surface of the counter electrode. The reagent also may be disposed between the counter electrode and the working electrode without being in contact with the surfaces of the counter electrode and the working electrode. As described above, the method for measuring Hct value of the present invention is carried out in such a state that the oxidant exists on the surface of the counter electrode when the Hct value measuring voltage is applied. Therefore, the composition of the reagent is desirably set in such a way that prevents the reagent from being flown away at the time of introduction of the blood sample when the reagent is disposed on or in contact with the surface of the counter electrode. When the reagent is disposed without being in contact with the surface of the counter electrode, it is desirable to set the composition of the reagent so that the reagent is flown away with ease at the time of introduction of the blood sample. The reagent containing the oxidant may be disposed by dropping or applying to a predetermined portion a reagent solution prepared by dissolving or dispersing the oxidant in water or a conventional buffer solution, and then drying the reagent solution.

When the blood sample holder includes an inlet portion in communication with the blood sample inlet, and a first and a second branch portions branching out of the inlet portion while the first branch portion faces the counter electrode and the second branch portion faces the working electrode, the reagent may be disposed at the first branch portion while being in contact with a surface of the counter electrode facing the first branch portion or while being separated from the surface of the counter electrode.

The reagent containing the oxidant further may include other compounds. Some of the examples of such additional compounds include: amino acids (homogenizer) such as taurine, glycine, serine, proline, threonine, and lycine; carboxymethyl cellulose; hydroxyethyl cellulose; hydroxypropyl cellulose; methyl cellulose; ethyl cellulose; ethylhydroxyethyl cellulose; carboxyethyl cellulose; polyvinyl alcohol; polyvinyl pyrrolidone; polyamino acid such as polylysine; polystyrene sulfonate; gelatin and a derivative thereof; polyacrylic acid and a salt thereof; polymethacrylic acid and a salt thereof; starch and a derivative thereof; maleic anhydride polymer and a salt thereof; and agarose gel. The amount of oxidant disposed in the Hct value analyzer may be set such that the amount of oxidant in contact with the counter electrode in the measurement of Hct value is, for example, in a concentration of 0.1 to 1000 mM, 1 to 500 mM, or in some cases, 10 to 200 mM.

The shape and volume of the blood sample holder desirably are set such that the blood sample can be introduced therein by capillary action.

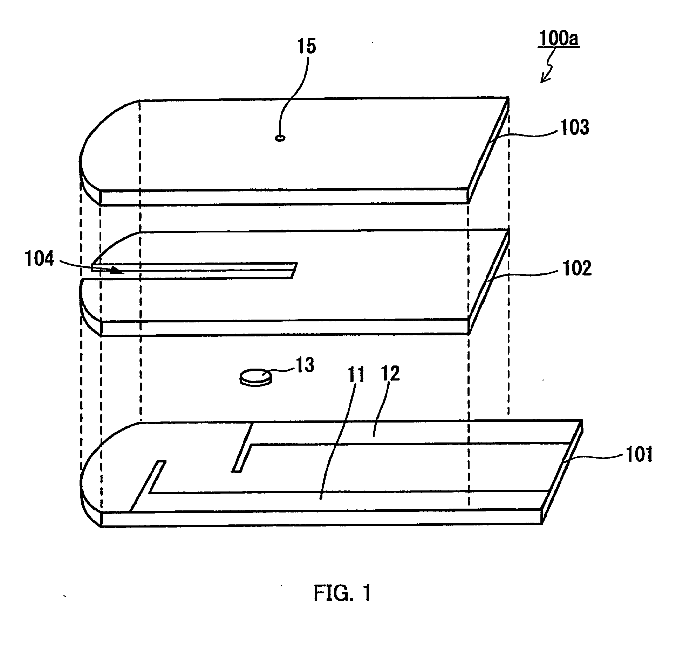

FIGS. 1 through 6 are diagrams depicting specific examples of the layout pattern of the reagents containing the oxidant, the shape of the blood sample holder, and the relative layout pattern of the counter electrode and the working electrode, in the sensor chip for measuring a Hct value.

### <Sensor Chip A for Measuring Hct Value>

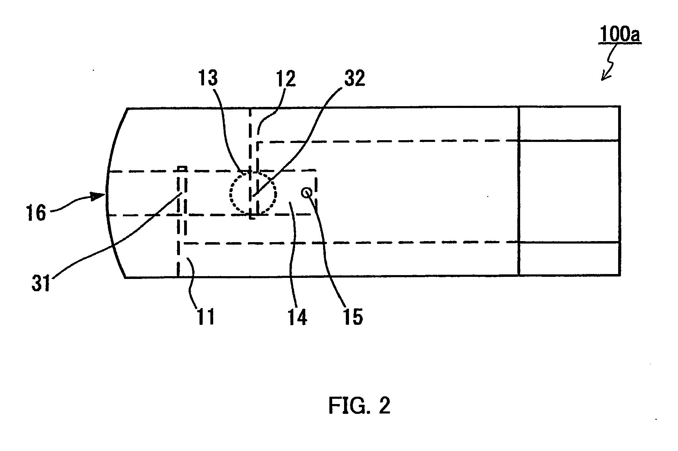

FIG. 1 is an exploded perspective view of a sensor chip A for measuring a Hct value, and FIG. 2 is a plan view of the sensor chip shown in FIG. 1. As shown in the figures, a sensor chip A100a for measuring a Hct value includes a spacer 102 having a rectangular cutout portion 104, an insulating substrate 101, and a cover 103. The cover 103 is disposed on the insulating substrate 101 with the spacer 102 in between, leaving one end portion of the insulating substrate 101 uncovered (on the right in the figures). These members 101, 102, and 103 are integrated, for example, by bonding or heat fusion. The cutout portion 104 of the spacer 102 serves as a blood sample holder 14 after integration of the members. The blood sample holder 14 extends along the longer side of the chip 100a, and is in communication with outside at an end portion of the spacer 102 (on the left in the figures). In other words, the blood sample holder 14 is in communication with a blood sample inlet 16 that opens to the outside of the chip 100a. The cover 103 includes an outlet 15, corresponding in position to a portion of the blood sample holder 14 at the opposite end of the end in communication with outside. A working electrode 11 and a counter electrode 12 are disposed on the insulating substrate 101 such that a portion (portion 31) of the working electrode 11 and a portion (portion 32) of the counter electrode 12 face the blood sample holder 14, and that the portion 31 is closer to the blood sample inlet 16 than the portion 32 is. The working electrode 11 and the counter electrode 12 each are connected to a lead (not shown). An end of each lead is exposed to outside of the chip 100a at the end portion of the insulating substrate 101 not covered with the spacer 102 and the cover 103, in order to apply a voltage across the working electrode and the counter electrode.

A surface of the portion 31 of the working electrode 11 is at least partially composed of a material including metal that readily undergoes electrolytic oxidation, such as silver, copper, and nickel. The material for a surface of the portion 32 of the counter electrode 12 is not particularly limited as described above.

A reagent 13 containing an oxidant of a redox substance is disposed in contact with the portion 32 of the counter electrode 12. The reagent 13 may not easily dissolve into a blood sample or may dissolve easily into a blood sample. In the blood sample holder 14, the reagent 13 is not disposed in contact with the portion 31 of the working electrode 11. In addition, the reagent 13 is not closer to the blood sample inlet 16 than the portion 31 is in such a state that the reagent 13 easily dissolves into the blood sample.

Preferably, the reagent 13 is disposed in contact with only the portion 32 of the counter electrode in the blood sample holder 14. By disposing the reagent this way, a pure blood sample substantially not containing the oxidant of the redox substance can be placed in a large quantity between the working electrode and the counter electrode in the measurement of Hct value. This improves the detection sensitivity of the Hct value.

The materials of the insulating substrate, the spacer, and the cover are not particularly limited as long as the working electrode and the counter electrode are not shorted by the integration. Examples of such materials include polyethylene terephthalate (PET), polycarbonate (PC), polyimide (PI), polyethylene (PE), polypropylene (PP), polystyrene (PS), polyvinyl chloride (PVC), polyoxymethylene (POM), monomer-cast nylon (MC), polybutylene terephthalate (PBT), methacrylic resin (PMMA), ABS resin (ABS), and glass.

In a sensor chip for measuring a Hct value of the present invention, one of the requirements in introducing a blood sample into the blood sample holder and applying a voltage across the working electrode and the counter electrode is that the blood sample is in contact with the counter electrode and the working electrode while the oxidant from the reagent disposed in the sensor chip is in contact with the counter electrode but is substantially not in contact with the working electrode. So long as these conditions are met, any arrangement can be made concerning the shape of the blood sample holder, the layout pattern of the reagents containing the oxidant, and the relative layout pattern of the counter electrode and the working electrode. Other exemplary configurations of a sensor chip for measuring a Hct value of the present invention are described below.

### <Sensor Chip B for Measuring Hct Value>

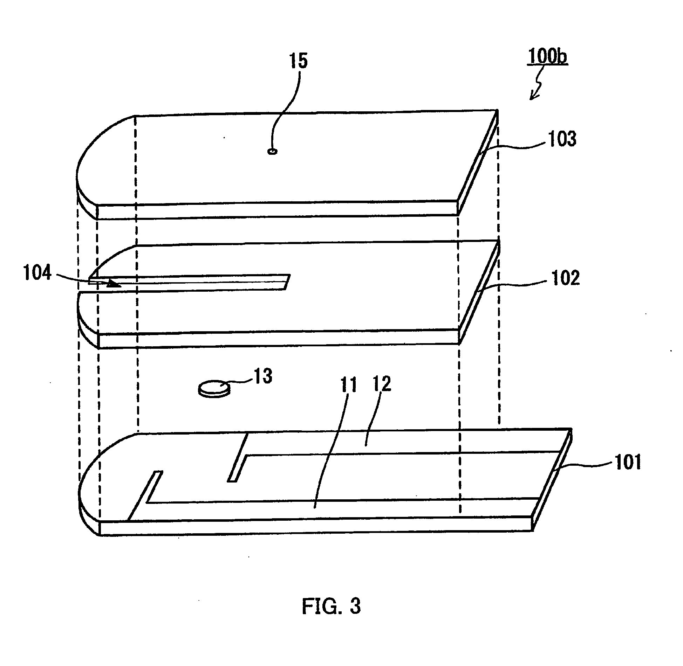

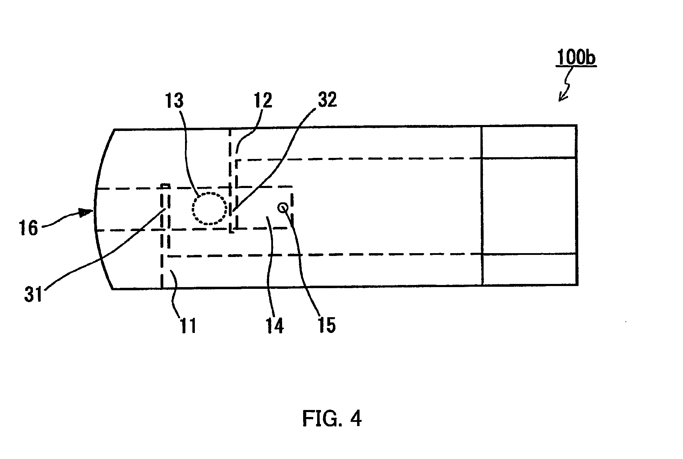

FIG. 3 is an exploded perspective view of a sensor chip B for measuring a Hct value, and FIG. 4 is a plan view of the sensor chip shown in FIG. 3. As shown in the figures, a sensor chip B100b for measuring a Hct value has the same configuration as the sensor chip A for measuring a Hct value except that, at the blood sample holder 14, the reagent 13 is separated from the portion 32 of the counter electrode 12 and is closer to the blood sample inlet 16 than the portion 32 is while being disposed between the portion 31 of the working electrode 11 and the portion 32 of the counter electrode 12 in such a state that the reagent 13 easily dissolves into the blood sample.

### <Sensor Chip C for Measuring Hct Value>

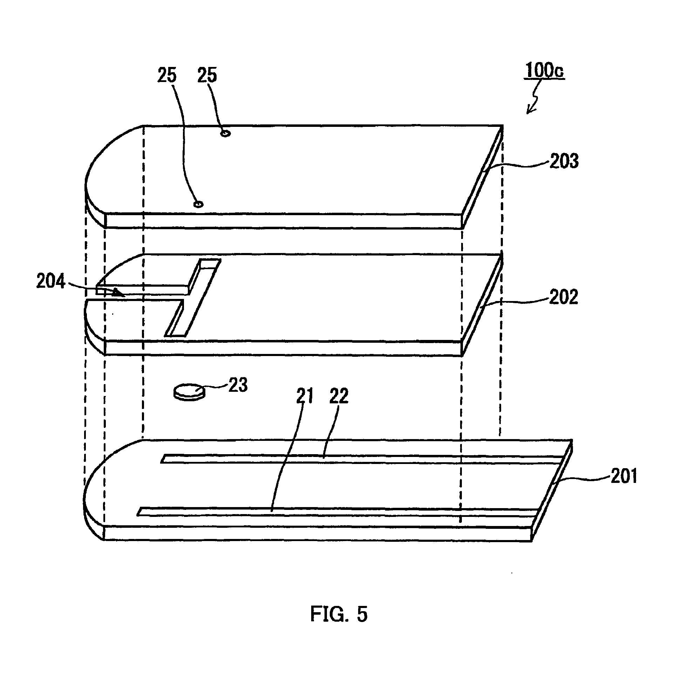

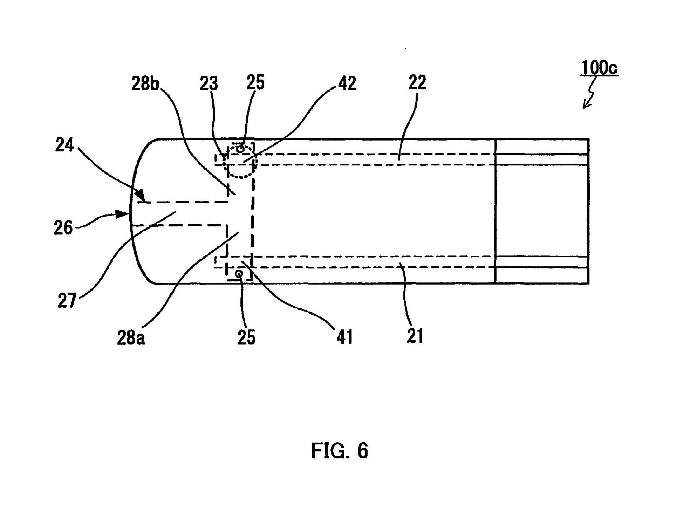

FIG. 5 is an exploded perspective view of a sensor chip C for measuring a Hct value, and FIG. 6 is a plan view of the sensor chip shown in FIG. 5. As shown in the figures, a sensor chip C100c for measuring a Hct value includes a spacer 202 having a T-shaped cutout portion 204, and insulating substrate 201, and a cover 203. The cover 203 is disposed on the insulating substrate 201 with the spacer 202 in between, leaving one end portion of the insulating substrate 201 uncovered (on the right in the figures). These members 201, 202, and 203 are integrated, for example, by bonding or heat fusion. The cutout portion 204 of the spacer 202 serves as a blood sample holder 24 after integration of the members. The blood sample holder 24 includes an inlet portion 27 extending along the longer side of the chip 100c, and two branch portions 28a and 28b branching out of the inlet portion 27 and extending along the shorter side of the chip 100c. The inlet portion 27 is in communication with the outside at an end portion of the spacer 202 (on the left in the figures). In other words, the blood sample holder 24 is in communication with a blood sample inlet 26, which opens to outside of the chip 100c. The cover 203 includes outlets 25, respectively corresponding in position to the ends of the branch portions 28a and 28b. A working electrode 21 and a counter electrode 22 are disposed on the insulating substrate 201 such that a portion (portion 41) of the working electrode 21 and a portion (portion 42) of the counter electrode 22 face the branch portions 28a and 28b, respectively. The working electrode 21 and the counter electrode 22 each are connected to a lead (not shown). An end of each lead is exposed to outside of the chip 100c at the end portion of the insulating substrate 201 not covered with the spacer 202 and the cover 203, in order to apply a voltage across the working electrode and the counter electrode.

At least part of a surface of the portion 41 of the working electrode 21 is composed of a material including metal that readily undergoes electrolytic oxidation, such as silver, copper, and nickel. The material used for a surface of the portion 42 of the counter electrode 22 is not particularly limited.

A reagent 23 containing the oxidant of the redox substance is disposed in contact with the portion 42 of the counter electrode 22. The reagent 23 may not easily dissolve into the blood sample or may dissolve easily into the blood sample.

The reagent 23 is not disposed in contact with the portion 41 of the working electrode 21. In the inlet portion 27, the reagent 23 is not disposed in such a state that it easily dissolves into the blood sample. In addition, in the branch portion 28a, the reagent 23 is not closer to the inlet portion 27 than the portion 41 of the working electrode 21 is in such a state that it easily dissolves into the blood sample. Preferably, the reagent 23 is disposed in contact with only the portion 42 of the counter electrode in the blood sample holder 24. In the branch portion 28b, the reagent 23 may be disposed separate from the portion 42 of the counter electrode 22 while being closer to the inlet portion 27 than the portion 42 is in a state that it easily dissolves into the blood sample.

The measurement of the Hct value of the blood sample by the sensor chip for measuring a Hct value can be performed using, for example, a sensor unit for measuring a Hct value, which is an example of a sensor unit of the present invention.

The sensor unit for measuring a Hct value includes a sensor chip for measuring a Hct value, and a sensor main body detachably provided with the sensor chip. The sensor main body includes a voltage applying circuit capable of applying a predetermined voltage across the working electrode and the counter electrode of the sensor chip with the sensor chip attached to the sensor main body.

The voltage applying circuit applies a voltage of 3.0 V or less across the working electrode and the counter electrode, when the working electrode is the anode and the counter electrode is the cathode. The applied voltage may be, for example, 1.0 V or less, 0.75 V or less, 0.5 V or less, 0.25 V or less, 0.15 V or less, or 0.1 V or less. The lower limit of the voltage is not particularly limited as long as the metal that readily undergoes electrolytic oxidation is oxidized at the working electrode and the oxidant is reduced at the counter electrode. However, the voltage is desirably 0 V or greater, when the working electrode is the anode and the counter electrode is the cathode.

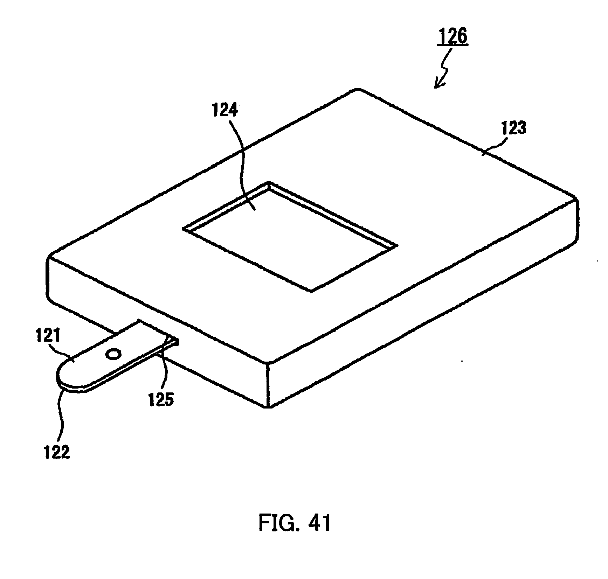

FIG. 41 is a diagram showing an example of the sensor unit for measuring a Hct value. A sensor unit 126 for measuring a Hct value includes a flat hexahedral sensor main body 123, and a sensor chip 121 for measuring a Hct value. Through one side wall surface of the sensor main body 123, an attachment opening 125 is provided in the shape of a rectangular aperture. The sensor chip 121 is attached to the sensor main body 123 by being detachably coupled to the attachment opening 125. A display section 124 for displaying a measurement result of Hct value is provided substantially at the center of one principal surface of the sensor main body 123.

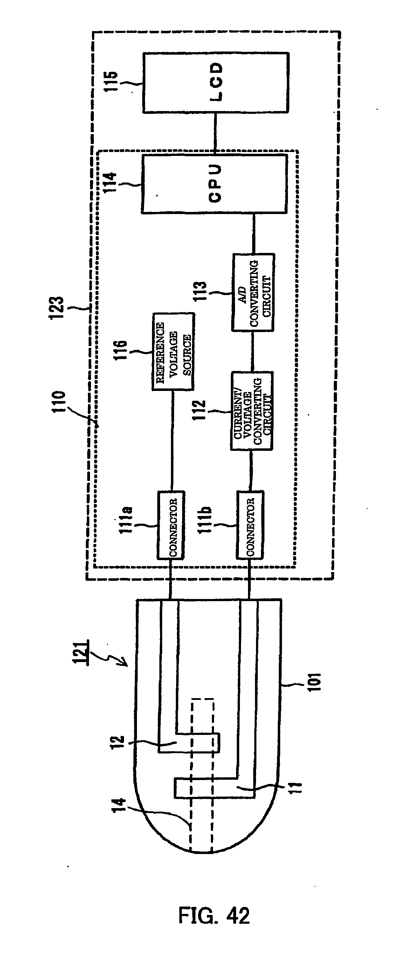

FIG. 42 is a diagram showing an exemplary circuit structure for measuring a Hct value in the sensor unit 126 for measuring a Hct value. The sensor main body 123 includes a voltage applying circuit 110 for applying a predetermined voltage across the working electrode 11 and the counter electrode 12 of the sensor chip 121, and a liquid crystal display (LCD) 115 as the display section 124. The voltage applying circuit 110 includes two connectors 111a and 111b, a current/voltage converting circuit 112, an A/D converting circuit 113, a central processing unit (CPU) 114, and a reference voltage source 116. These elements 111a, 111b, 112, 113, 114, 115, and 116 are connected electrically to one another, as indicated by the solid lines in FIG. 42.

The measurement of the Hct value of the blood sample using the sensor unit 126 proceeds as follows, for example. First, a blood sample is introduced into the blood sample holder 14 of the sensor chip 121 through a blood sample inlet 122 of the sensor chip 121. Then, under an instruction from the CPU 114, a predetermined Hct value measuring voltage is applied across the working electrode 11 and the counter electrode 12 by the current/voltage converting circuit 112 and the reference voltage source 116. The Hct value measuring voltage is applied for an adjusted time period, for example, 0.001 to 60 seconds, preferably 0.01 to 10 seconds, more preferably 0.01 to 5 seconds, and even more preferably 0.01 to 3 seconds. The value of the current flown between the working electrode 11 and the counter electrode 12 by the application of the Hct value measuring voltage is converted to a voltage value by the current/voltage converting circuit 112. This voltage value is then converted to a digital value by the A/D converting circuit 113 before it is sent to the CPU 114. The CPU 114 calculates a Hct value based on the digital value. The Hct value is calculated, for example, by referring to a standard curve or a standard table, relating the Hct value of a blood sample to the amount of current after a predetermined time period from the application of the Hct value measuring voltage. The result of calculation is visually displayed on the LCD 115.

With a method for measuring a Hct value of a blood sample of the present invention, the analyte concentration in the blood sample can be measured with improved accuracy. The analyte concentration in the blood sample is determined based on data C, which is obtained by correcting preliminary measurement data (data B) of the analyte in the blood sample using data A, which corresponds to the Hct value of the blood sample.

The data A corresponding to the Hct value of the blood sample is obtained by a method for measuring a Hct value of a blood sample of the present invention. The data A may be a value that results from the conversion of current A into a Hct value, wherein the current A is a current flowing through the working and counter electrodes for Hct value measurement (a working and a counter electrode for correction), reflecting the Hct value of the blood sample. Alternatively, the data A may be a value obtained by the conversion of the current A into some other parameter different from the Hct value. Further, the data A may be the current A itself. The conversion of the current A into a Hct value is performed, for example, by referring to a standard curve or a standard table, relating current A to Hct value after a predetermined time period from the application of the Hct value measuring voltage.

The current B is detected in order to obtain the data B. The current B is a current flowing between a working electrode (working electrode for preliminary measurement) and a counter electrode (counter electrode for preliminary measurement), as a result of applying a voltage (preliminary measuring voltage) across these electrodes in contact with a blood sample after a certain time period of reaction between the analyte in the blood sample and a redox enzyme that uses the analyte as a substrate. The data B may be, for example, a value that results from the conversion of the current B into a preliminary measurement concentration of the analyte. Alternatively, the data B may be, for example, a value obtained by the conversion of the current B into some other parameter different from the preliminary measurement concentration. Further, the data B may be the current B itself, for example. The conversion of the current B into a preliminary measurement concentration is performed, for example, by referring to a standard curve or a standard table, relating current B to preliminary measurement concentration after a predetermined time period from the application of the preliminary measuring voltage.

The current B is detected using a redox substance, for example, a reversible electroactive compound as represented by ferricyanide, which mediates the movement of electrons between the enzyme reaction and the electrode reaction. The content of the redox substance in the blood sample brought into contact with the working electrode for preliminary measurement and the counter electrode for preliminary measurement may be 0.1 to 1000 mM, for example. In the detection of current B, the redox enzyme and the redox substance may be in contact with the counter electrode for preliminary measurement and the working electrode for preliminary measurement by being contained in the blood sample brought into contact with these electrodes, for example. Alternatively, the redox enzyme and the redox substance directly may be disposed on these electrodes, for example. Further, the redox enzyme and the redox substance may be embedded in the surfaces of these electrodes, for example. That is, in the detection of current B, the redox enzyme and the redox substance may be in contact with the electrodes by being dissolved in the blood sample, or by being provided as a solid.

The analyte in the blood sample may be a substance other than blood cells. Some of the examples include glucose, albumin, lactic acid, bilirubin, and cholesterol. The redox enzyme is selected according to the type of substrate, i.e., the analyte being analyzed. Examples of the redox enzyme include glucose oxidase, glucose dehydrogenase, lactate oxidase, lactate dehydrogenase, bilirubin oxidase, and cholesterol oxidase. The amount of redox enzyme that reacts with the analyte may be set such that the content of the redox enzyme in the blood sample is, for example, 0.01 to 100 units (U), 0.05 to 10 U, or in some cases, 0.1 to 5 U.

The reaction time of the analyte and the redox enzyme may be, for example, 0 to 60 seconds, 0.5 to 30 seconds, or in some cases, 1 to 10 seconds. The preliminary measuring voltage may be, for example, 0.05 to 1 V, 0.1 to 0.8 V, or in some cases, 0.2 to 0.5 V, when the working electrode for preliminary measurement is the anode and the counter electrode for preliminary measurement is the cathode. The preliminary measuring voltage may be applied for, for example, 0.01 to 30 seconds, 0.1 to 10 seconds, or in some cases, 1 to 5 seconds.

The counter electrode for preliminary measurement or the working electrode for preliminary measurement may be provided separately from the counter electrode for correction or the working electrode for correction. Alternatively, part of or all of the counter electrode for correction or the working electrode for correction may be used as the counter electrode for preliminary measurement or the working electrode for preliminary measurement. For example, the working electrode for preliminary measurement also may be used as the counter electrode for correction.

The counter electrode for preliminary measurement and the working electrode for preliminary measurement can be configured in the same manner as the counter electrode for correction. The shape, size, and layout pattern of the counter electrode for preliminary measurement and the working electrode for preliminary measurement are not particularly limited.

The order of detecting the current A and current B is not particularly limited. For example, when the working electrode for preliminary measurement and the counter electrode for correction are realized by a single electrode as mentioned above, it is preferable that the current A be detected after detecting the current B, considering the possible shortage of the redox substance of the form brought into contact with the electrode in the detection of each current. This needs to be prevented because the redox reaction on the electrode becomes a rate-limiting step in this case.

As described, the analyte concentration in the blood sample is determined based on data C, which is obtained by correcting data B with data A. The resulting value of data C corresponds to data B. The data C may be, for example, the analyte concentration itself in the blood sample, or a corrected current value. When the value of data C is not the analyte concentration itself, the analyte concentration in the blood sample is determined by referring to a standard curve or a standard table, relating the value of data C to the analyte concentration in the blood sample.

The analyte concentration in the blood sample can be measured using a sensor chip for measuring an analyte concentration, which is another example of a sensor chip of the present invention.

The sensor chip for measuring an analyte concentration includes a Hct value analyzer, analogous to that in the sensor chip for measuring a Hct value.

The sensor chip for measuring an analyte concentration includes an analyzer for preliminary measurement, used for electrochemical detection of the current B. The analyzer for preliminary measurement may be provided separately from the Hct value analyzer, or part of or all of the Hct value analyzer may be used as the analyzer for preliminary measurement. For example, the electrode system (electrode system A), the blood sample holder (blood sample holder A), and the blood sample inlet (blood sample inlet A) of the Hct value analyzer may be used to realize an electrode system (electrode system B) including the working electrode for preliminary measurement and the counter electrode for preliminary measurement, a blood sample holder (blood sample holder B) for holding the blood sample in contact with the working electrode for preliminary measurement and the counter electrode for preliminary measurement, and a blood sample inlet (blood sample inlet B) in communication with the blood sample holder B, respectively.

When the analyzer for preliminary measurement is separately provided from the Hct value analyzer, the blood sample inlet B of the analyzer for preliminary measurement may be provided more toward the downstream side compared to the Hct value analyzer, with respect to the flow of the blood sample introduced into the sensor chip, so that, in the detection of current A, the oxidant of the redox substance will not be in contact with the working electrode for correction as a result of the inflow of the blood sample. When part of or all of the Hct value analyzer is used as the analyzer for preliminary measurement, the layout pattern of the reagent containing the oxidant, the shape of the blood sample holder, and the layout pattern of each electrode system may be set in the manner described later. Note that, when at least part of the electrode system A is used to realize the electrode system B, the working electrode for preliminary measurement and the counter electrode for correction may be realized by a single electrode, as described above.

The working electrode for preliminary measurement and the counter electrode for preliminary measurement at least partially face the blood sample holder B, so as to be in contact with the blood sample introduced into the blood sample holder B.

The analyzer for preliminary measurement may include the redox enzyme and the redox substance associated with the enzymatic cycling reaction for the preliminary measurement of the analyte concentration. The redox enzyme may contain an enzyme stabilizer as represented by, for example, a sugar alcohol such as maltitol, sorbitol, and xylitol. The amount of redox enzyme in the analyzer for preliminary measurement may be set such that the content of the redox enzyme in the blood sample is, for example, 0.01 to 100 units (U), 0.05 to 10 U, or in some cases, 0.1 to 5 U.

Desirably, the shape and volume of the blood sample holder B are set such that the blood sample can be introduced therein by capillary action.

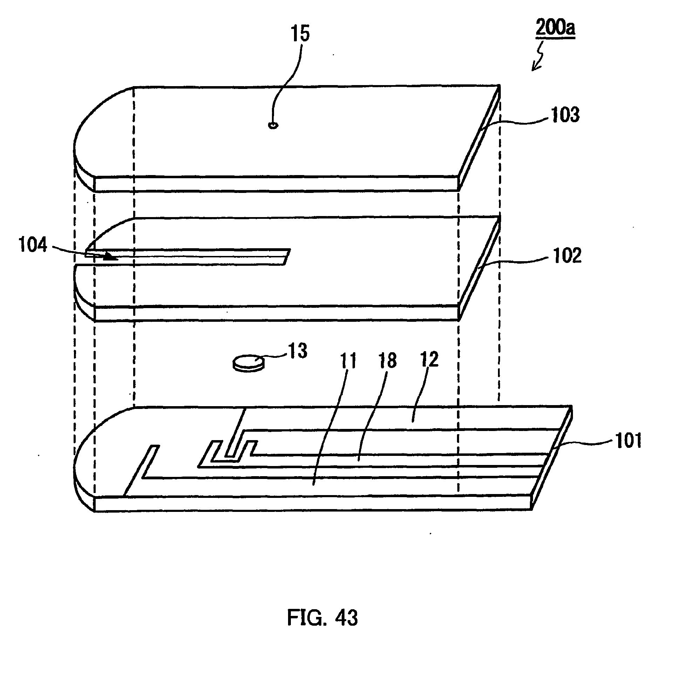

FIGS. 43 through 48 are diagrams depicting specific examples of the layout pattern of the reagent containing the oxidant, the shape of the blood sample holder, and the layout pattern of the electrode system in the sensor chip for measuring an analyte concentration. In all of these examples, the analyzer for preliminary measurement and the Hct value analyzer share some of the same components. Specifically, the working electrode for preliminary measurement and the counter electrode for correction are realized by a single electrode, and the blood sample holder A and the blood sample inlet A also serve as the blood sample holder B and the blood sample inlet B, respectively.

### <Sensor Chip A for Measuring Analyte Concentration>

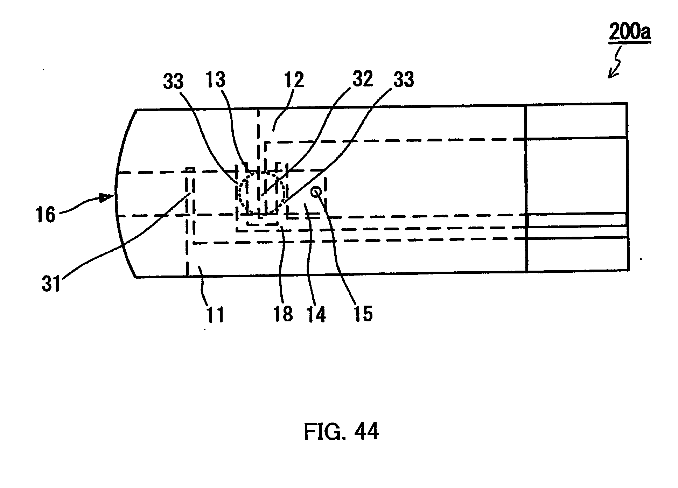

FIG. 43 is an exploded perspective view of a sensor chip A for measuring an analyte concentration, and FIG. 44 is a plan view of the sensor chip shown in FIG. 43. As shown in the figures, a sensor chip A200a for measuring an analyte concentration has the same configuration as the sensor chip A100a for measuring a Hct value except that a counter electrode 18 for preliminary measurement, having a branched U-shaped portion (portion 33) facing the blood sample holder 14 and extending on the both sides of the portion 32, is disposed on the insulating substrate 101. The counter electrode 12 also serves as the working electrode for preliminary measurement. The counter electrode 18 for preliminary measurement is connected to a lead (not shown). An end of the lead is exposed to the outside of the chip 200a at the end portion of the insulating substrate 101 not covered with the spacer 102 and the cover 103.

Another electrode may be disposed on the insulating substrate. For example, a blood detecting electrode for detecting an inflow of a sufficient measurement amount of blood sample into the blood sample holder may be disposed on the insulating substrate such that a portion of the blood detecting electrode faces the blood sample holder and is farther from the blood sample inlet than the portion 33 is.

### <Sensor Chip B for Measuring Analyte Concentration>

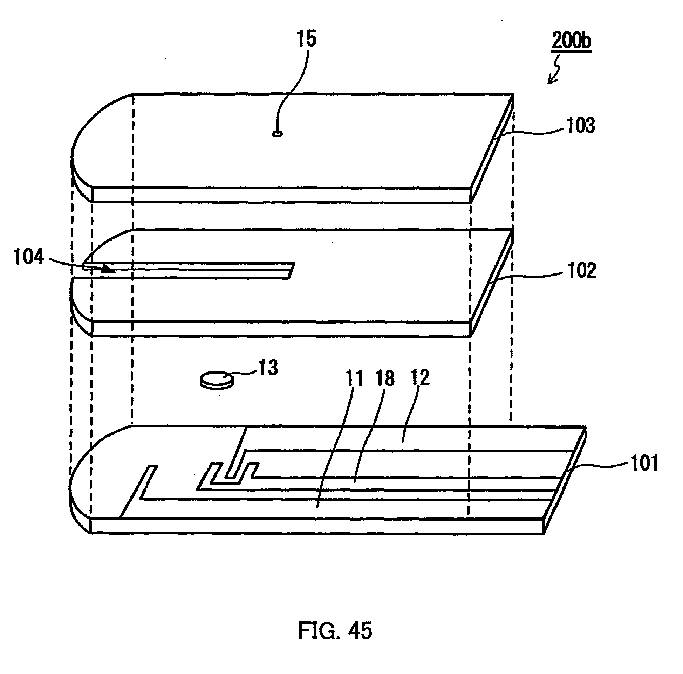

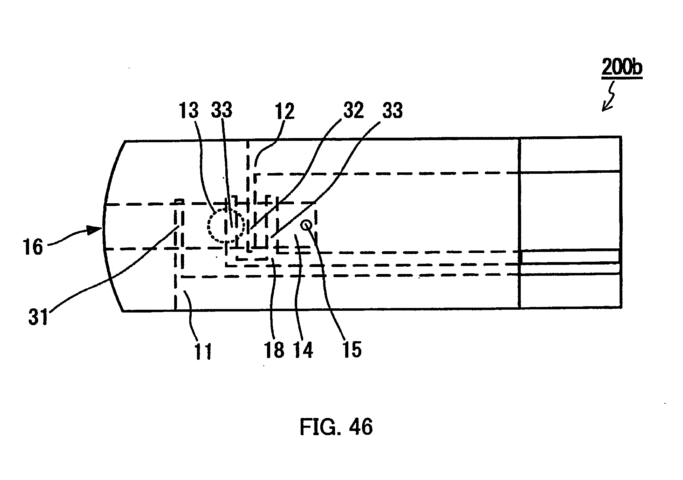

FIG. 45 is an exploded perspective view of a sensor chip B for measuring an analyte concentration, and FIG. 46 is a plan view of the sensor chip shown in FIG. 45. As shown in the figures, a sensor chip B200b for measuring an analyte concentration has the same configuration as the sensor chip A for measuring an analyte concentration except that, in the blood sample holder 14, the reagent 13 is separated from the portion 32 of the counter electrode 12 and is closer to the blood sample inlet 16 than the portion 32 is, and that the reagent 13 is disposed between the portion 31 of the working electrode 11 and the portion 32 of the counter electrode 12 in such a state that it dissolves easily into the blood sample.

### <Sensor Chip C for measuring an analyte concentration>

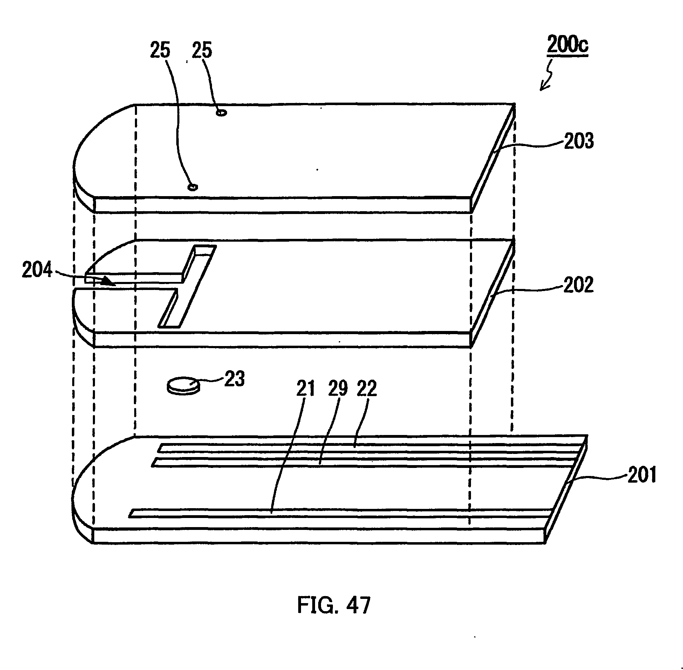

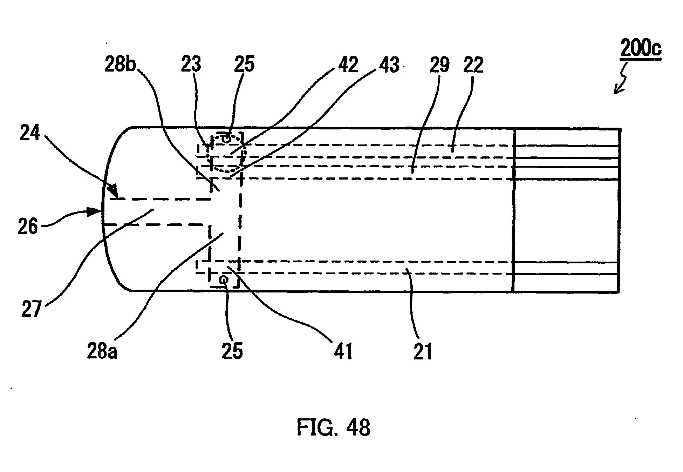

FIG. 47 is an exploded perspective view of a sensor chip C for measuring an analyte concentration, and FIG. 48 is a plan view of the sensor chip shown in FIG. 47. As shown in the figures, a sensor chip C200c for measuring an analyte concentration has the same configuration as the sensor chip C100c for measuring a Hct value except that a counter electrode 29 for preliminary measurement is disposed on the insulating substrate 201 such that a portion (portion 43) of the counter electrode 29 for preliminary measurement faces the branch portion 28b and is closer to the inlet portion 27 than the portion 42 is. The counter electrode 22 also serves as the working electrode for preliminary measurement. The counter electrode 29 for preliminary measurement is connected to a lead (not shown). An end of the lead is exposed to outside of the chip 200c at the end portion of the insulating substrate 201 not covered with the spacer 202 and the cover 203.

The measurement of the analyte concentration in the blood sample by the sensor chip for measuring an analyte concentration can be performed using, for example, a sensor unit for measuring an analyte concentration, which is another example of a sensor unit of the present invention.

The sensor unit for measuring an analyte concentration includes a sensor chip for measuring an analyte concentration, and a sensor main body detachably provided with the sensor chip. The sensor main body has the same configuration as the sensor main body of the sensor unit for measuring a Hct value shown in FIG. 41 except that a circuit for the preliminary measurement of the analyte concentration in the blood sample is provided in addition to the circuit for measuring a Hct value.

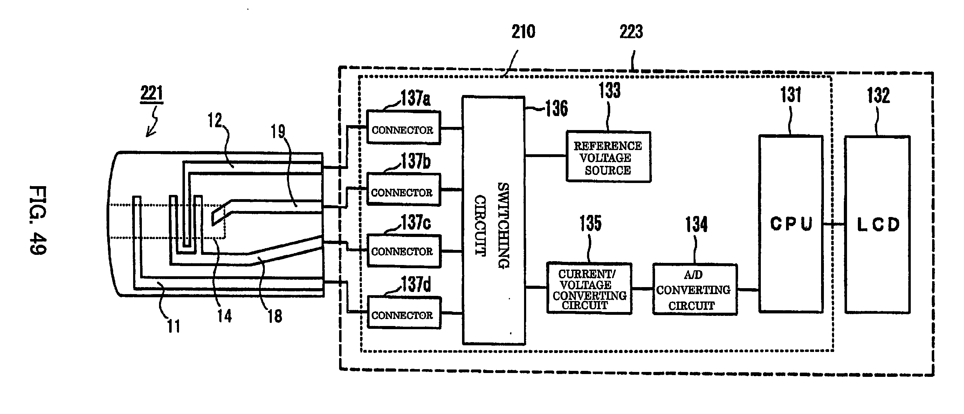

FIG. 49 is a diagram showing an exemplary circuit structure for measuring an analyte concentration in a blood sample, in the sensor unit for measuring an analyte concentration. The sensor main body 223 includes a voltage applying circuit 210 for applying a voltage across at least two of the electrodes selected from the working electrode 11 for correction, the counter electrode 12 for correction, the counter electrode 18 for preliminary measurement, and the blood sample detecting electrode 19 in the sensor chip 221 for measuring an analyte concentration; and a liquid crystal display (LCD) 132 as a display section of the sensor main body. The voltage applying circuit 210 is capable of applying a predetermined voltage across the working electrode 11 for correction and the counter electrode 12 for correction, and switching the applied potential to the electrodes so that the electrode can be used as the anode or cathode. By the switching, the counter electrode 12 for correction also can serve as the working electrode for preliminary measurement. The voltage applying circuit 210 includes four connectors 137a, 137b, 137c, and 137d, a switching circuit 136, a current/voltage converting circuit 135, an A/D converting circuit 134, a reference voltage source 133, and a central processing unit (CPU) 131. These elements 131, 132, 133, 134, 135, 136, 137a, 137b, 137c, and 137d are connected electrically to one another, as indicated by the solid lines in FIG. 49.

The measurement of the analyte concentration in the blood sample using the sensor unit for measuring an analyte concentration is performed as follows, for example.

First, under an instruction from the CPU 131, the working electrode 11 for correction is connected to the current/voltage converting circuit 135 via the connector 137d, and the blood sample detecting electrode 19 is connected to the reference voltage source 133 via the connector 137b. This is followed by application of a certain voltage across the electrodes under an instruction from the CPU 131. The applied voltage may be, for example, 0.05 V to 1 V, when the working electrode for correction is the anode and the blood sample detecting electrode is the cathode. Introducing a blood sample into the blood sample holder 14 of the sensor chip 221 through the blood sample inlet of the sensor chip 221 generates a current flow between the working electrode 11 for correction and the blood sample detecting electrode 19. The current value is converted into a voltage value by the current/voltage converting circuit 135, and is sent to the CPU 131 after conversion into a digital value by the A/D converting circuit 134. Based on the digital value, the CPU 131 detects the inflow of the blood sample into the blood sample holder.

Following the inflow of the blood sample, the analyte in the blood sample is allowed to react with the redox enzyme for, for example, 0 to 60 seconds, so as to calculate a preliminary measurement concentration of the analyte in the blood sample as follows. First, under an instruction from the CPU 131, the switching circuit 136 comes into operation to connect the counter electrode for preliminary measurement, also serving as the counter electrode 12 for correction, to the current/voltage converting circuit 135 via the connector 137a, and the working electrode 18 for preliminary measurement to the reference voltage source 133 via the connector 137c. This is followed by application of a voltage of the foregoing range across the electrodes, under an instruction from the CPU 131. For example, when the working electrode for preliminary measurement is the anode and the counter electrode for preliminary measurement is the cathode, a preliminary measuring voltage of 0.05 to 1 V is applied. The preliminary measuring voltage is applied for an adjusted time period of, for example, 0.01 to 30 seconds. The value of the current flowing between the electrodes by the application of the preliminary measuring voltage is converted into a voltage value by the current/voltage converting circuit 135, and is sent to the CPU 131 after conversion into a digital value by the A/D converting circuit 134. Based on the digital value, the CPU 131 calculates a preliminary measurement concentration of the analyte. The preliminary measurement concentration is calculated by referring to a standard curve or a standard table, relating the preliminary measurement concentration of the analyte to the amount of current after a predetermined time period from the application of the preliminary measuring voltage.

After calculating the preliminary measurement concentration, the Hct value of the blood sample is calculated as follows, for example. First, under an instruction from the CPU 131, the switching circuit 136 comes into operation to connect the working electrode 11 for correction to the current/voltage converting circuit 135 via the connector 137d, and the counter electrode 12 for correction to the reference voltage source 133 via the connector 137a. This is followed by application of a Hct value measuring voltage of 3.0 V or less across the electrodes under an instruction from the CPU 131, when the working electrode for correction is the anode and the counter electrode for correction is the cathode. The Hct value measuring voltage is applied for an adjusted time period of, for example, 0.001 to 60 seconds. The value of the current flowing between the electrodes by the application of the Hct value measuring voltage is converted into a voltage value by the current/voltage converting circuit 135, and is sent to the CPU 131 after conversion into a digital value by the A/D converting circuit 134. Based on the digital value, the CPU 131 calculates an Hct value. The Hct value is calculated by referring to, for example, a standard curve or a standard table, relating Hct value to the amount of current after a predetermined time period from the application of the Hct value measuring voltage.

Then, in the CPU 131, the preliminary measurement concentration calculated as above is corrected based on the Hct value, so as to determine the analyte concentration in the blood sample. The resulting analyte concentration is displayed visually on the LCD 132. The correction of the preliminary measurement concentration based on the Hct value is performed by referring to, for example, a standard curve or a standard table, relating the analyte concentration in the blood sample to Hct value and preliminary measurement concentration.

From the viewpoint of easier storage after production, it is preferable that a surface of a sensor chip of the present invention is coated with a substance that can dissolve into a blood sample, for example, a water soluble polymer, or that the entire sensor chip is airtightly packed, such that the surface of the working electrode for Hct value measurement composed of the metal that readily undergoes electrolytic oxidation is isolated from outside air. This is because when the surface of the working electrode for Hct value measurement is exposed to outside air, a coating of sulfide, oxide, and hydroxide of the metal that readily undergoes electrolytic oxidation forming the surface, for example, silver sulfide and copper hydroxide, tends to be formed thereon. The sensor chip airtightly can be packed by, for example, enclosing it in a sealed container made of a conventional material having high corrosion resistance and low air permeability, or by sandwiching it with films made of such a material.

The following will describe the present invention by way of examples and comparative examples.

### (Example 1)

A sensor chip A for measuring a Hct value was prepared. Silver was used as the electrode cores of the working electrode and the counter electrode. Using a spacer having a thickness of 100 µm, a 0.8 microliter (µL)-volume blood sample holder was formed. The effective areas of the working electrode and the counter electrode in the blood sample holder were 1.0 mm² and 1.8 mm², respectively, and the closest distance between the working electrode and the counter electrode was 2.4 mm. A surface of the electrode core of the working electrode served as the surface of the working electrode facing the blood sample holder. A surface of an underlayer that is a carboxymethyl cellulose (CMC) film disposed on the electrode core of the counter electrode served as the surface of the counter electrode facing the blood sample holder. The underlayer was disposed on the surface by applying a 0.25 mass% CMC aqueous solution (DAI-ICHI KOGYO SEIYAKU CO., LTD.) on the surface of the electrode core of the counter electrode (2.5 mg/sensor), and then by drying the solution at 55°C for 10 minutes. A reaction reagent layer containing the oxidant of the redox substance was disposed on the surface of the underlayer. The reaction reagent layer was disposed on the surface of the underlayer by applying a reagent solution, prepared by dissolving 50 mM potassium ferricyanide (KANTO CHEMICAL CO., INC.) into a 0.5 mass% CMC aqueous solution, on the surface of the underlayer (2.5 mg/sensor), and then by drying the solution at 55°C for 10 minutes. The closest distance between the working electrode and the reaction reagent layer was 1.8 mm. Hydrophilic treatment was applied to the spacer and cover with respect to a portion corresponding to the blood sample inlet respectively. The hydrophilic treatment was carried out by applying 2-butanol solution of yolk lecithin (NACALAI TESQUE, INC.) to the portions (2µL/sensor), and then by air-drying the solution.

Three kinds of blood samples with the Hct values of 25%, 45%, and 65% were prepared. Each blood sample was introduced into the blood sample holder of the sensor chip, and a voltage of 3.0 V or less was applied across the working electrode and the counter electrode serving as the anode and the cathode, respectively. A resulting current (response current) flowing between the working electrode and the counter electrode was measured.

In the measurement of the response current, the oxidant of the redox substance is in contact with the counter electrode and is substantially not in contact with the working electrode, while the blood sample is in contact with the both electrodes. A reductant, the opposite form of an oxidant out of the redox substance, is substantially in contact neither with the working electrode nor with the counter electrode in the measurement of the response current.

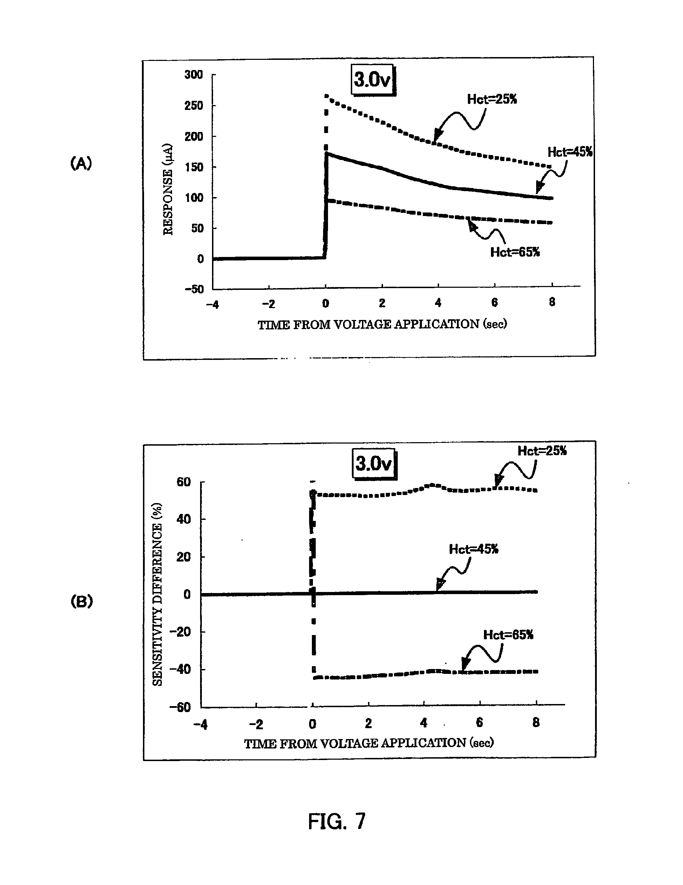

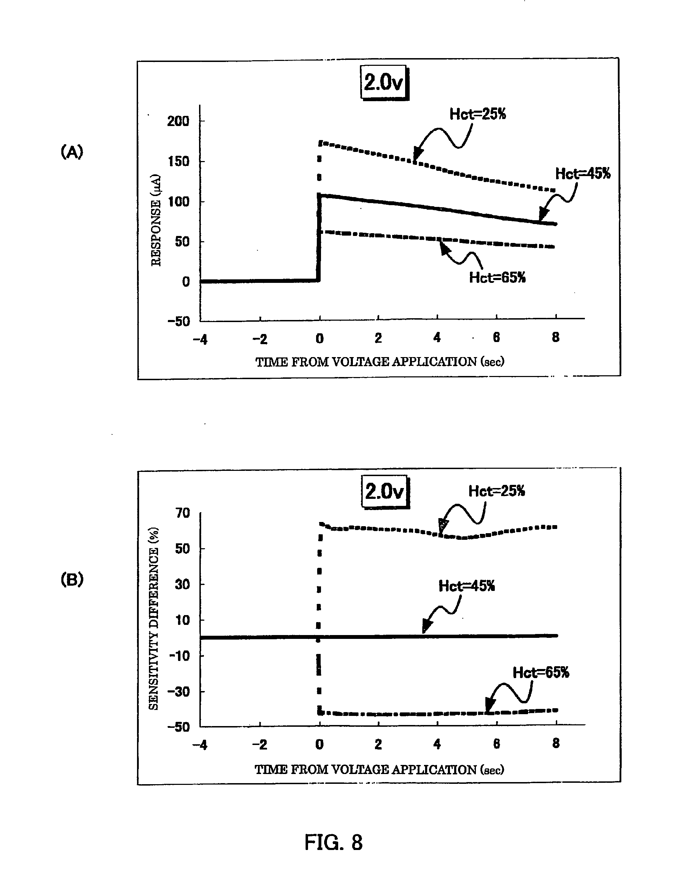

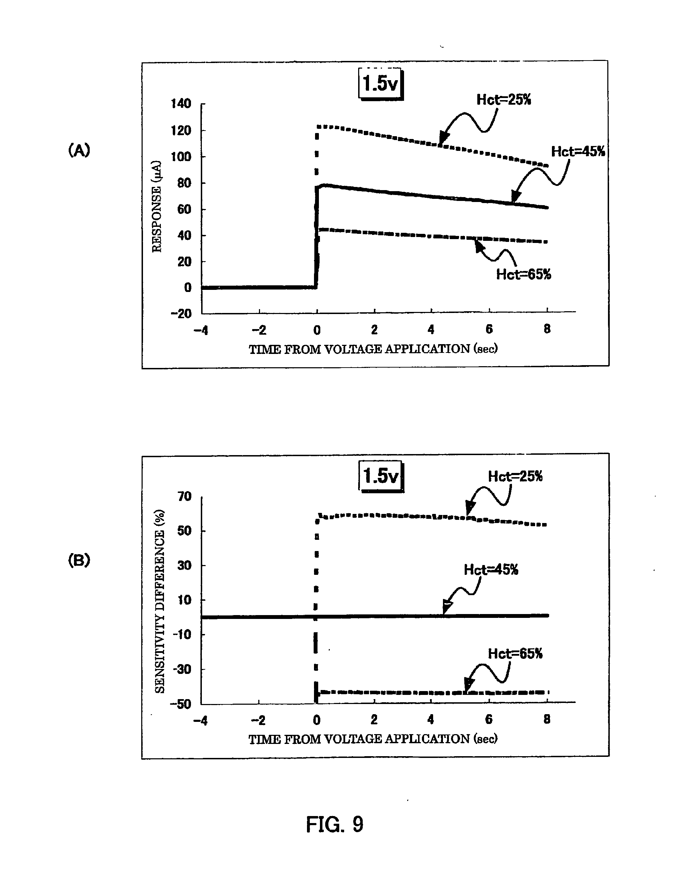

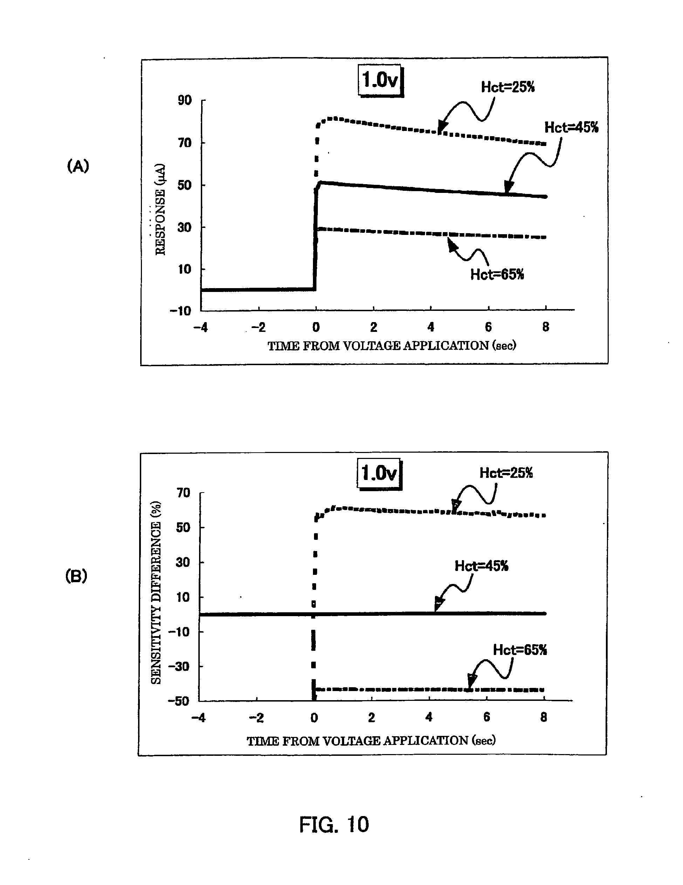

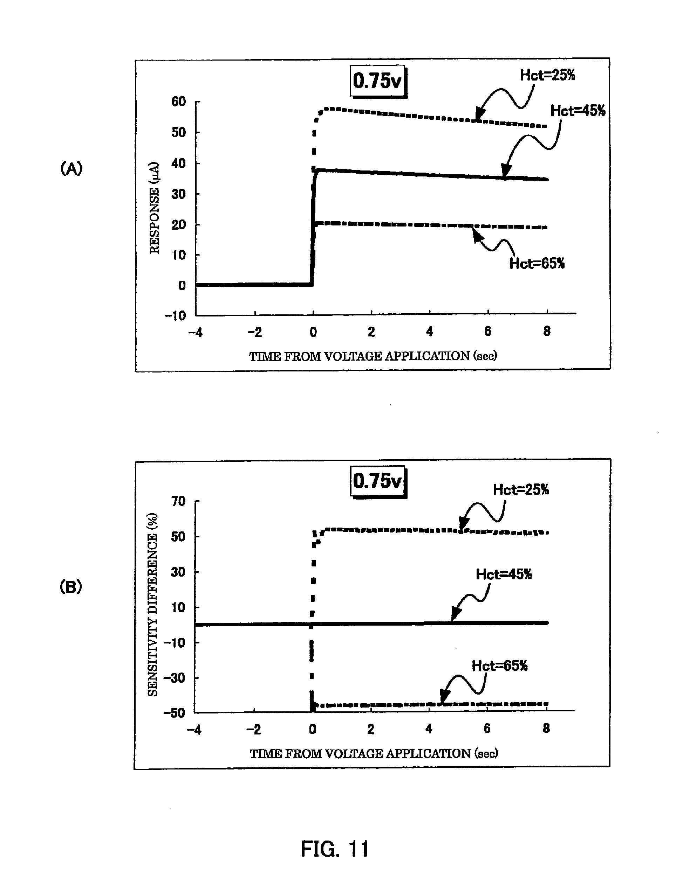

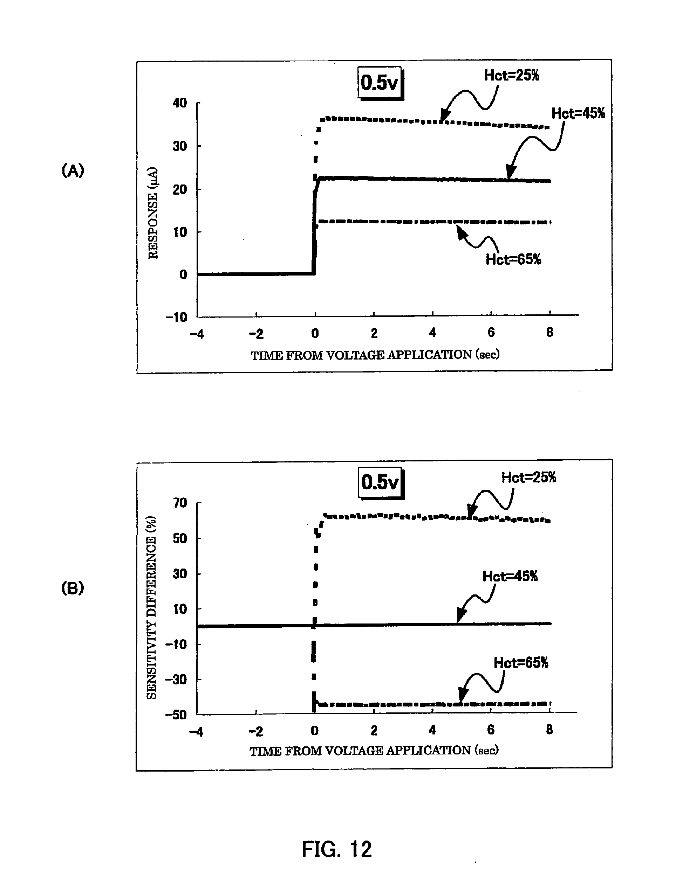

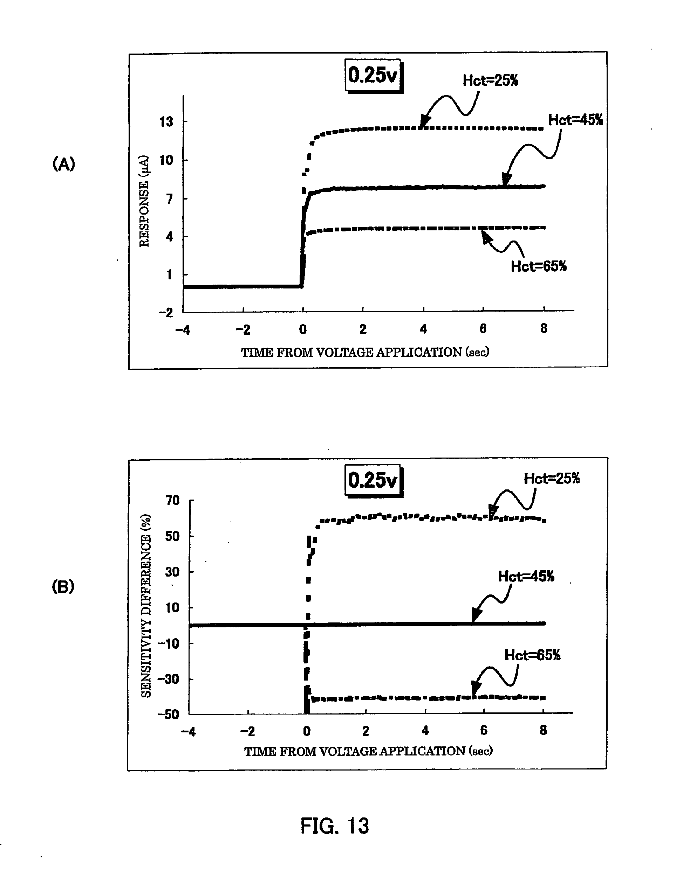

The results of measurement of response current are represented by the graphs shown in FIGS. 7 through 13. In each figure, graph (A) represents changes in response current value (µA) of each blood sample as a function of time. Graph (B) represents changes in relative amplitude values of the response currents obtained from the 25% and 65% Hct blood samples (sensitivity difference (%)) relative to the amplitude of the response current obtained from the 45% Hct blood sample, as a function of time. In graph (A) and graph (B), the horizontal axis represents time from the voltage application in seconds (sec).

As shown in the graphs, the sensor chip of Example 1 was able to detect response currents reflecting the Hct values of the blood samples with a stable and distinct sensitivity difference, immediately after the application of a voltage of 3.0 V or less across the working electrode and the counter electrode serving as the anode and the cathode, respectively.

### (Example 2)

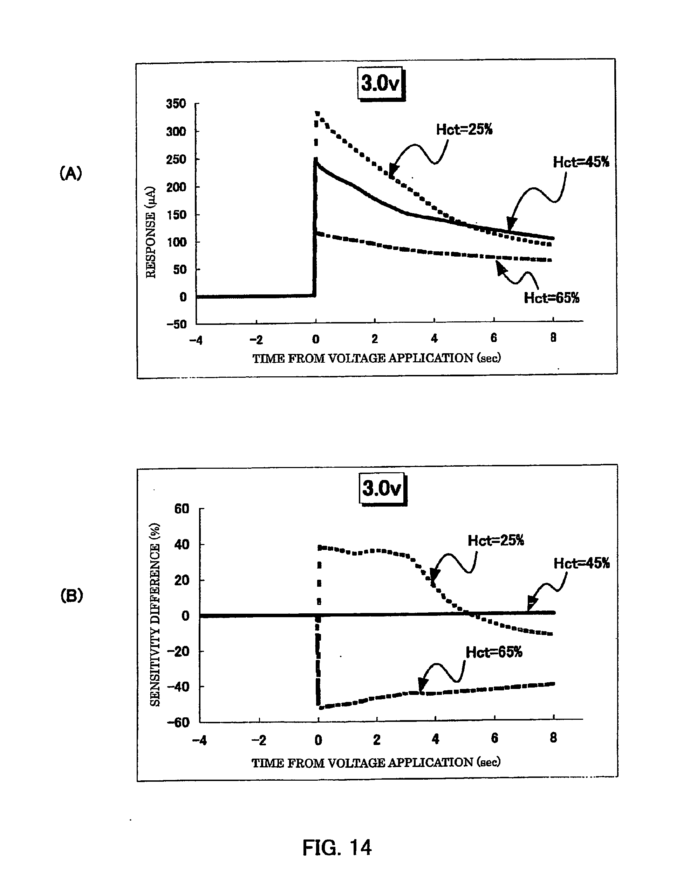

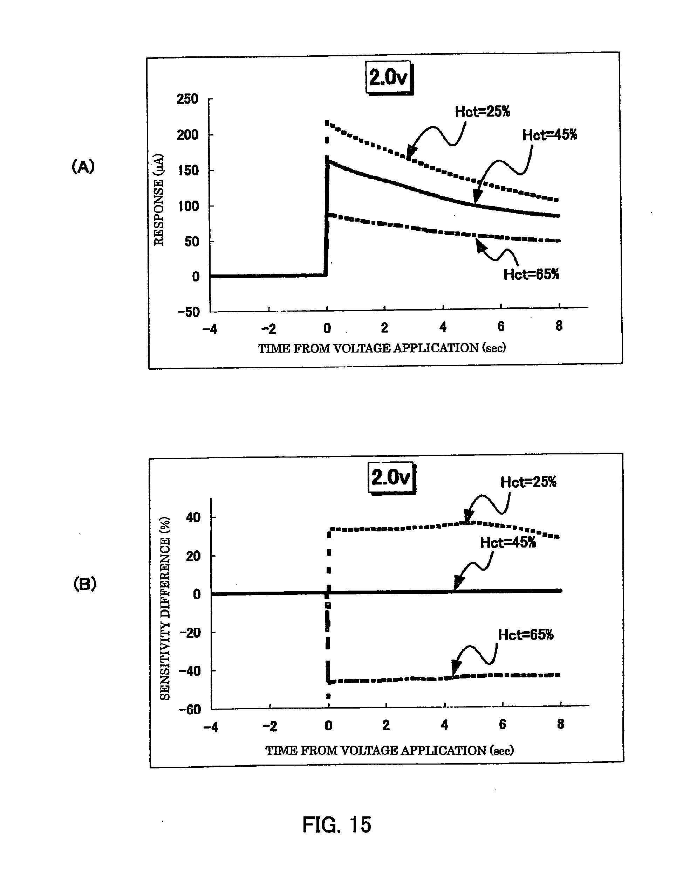

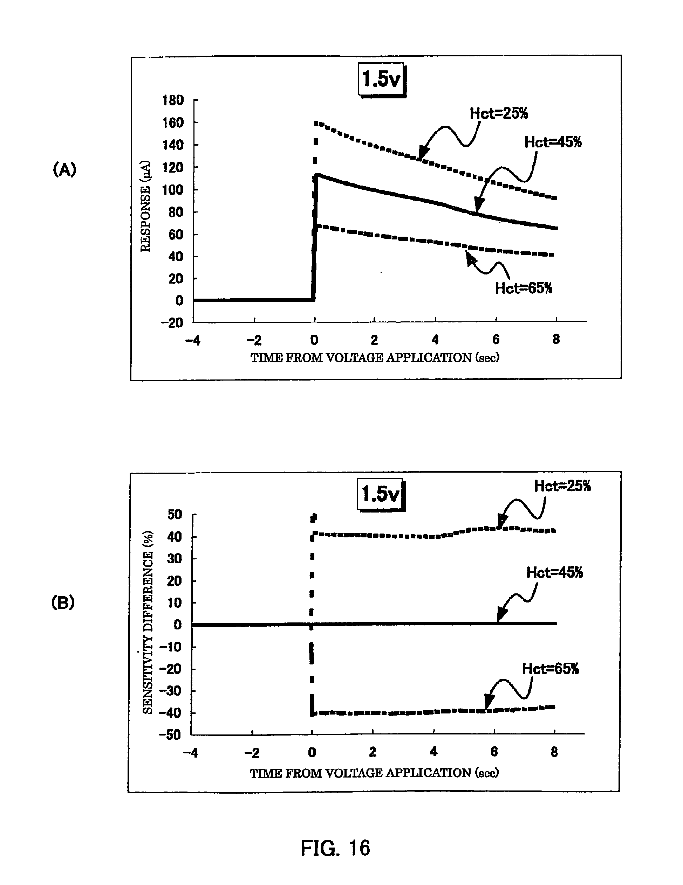

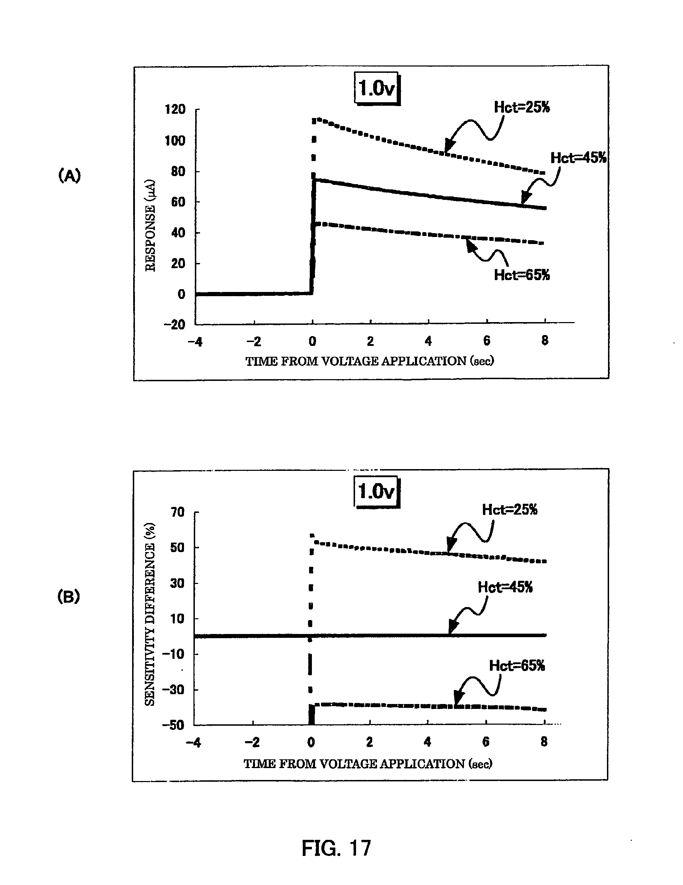

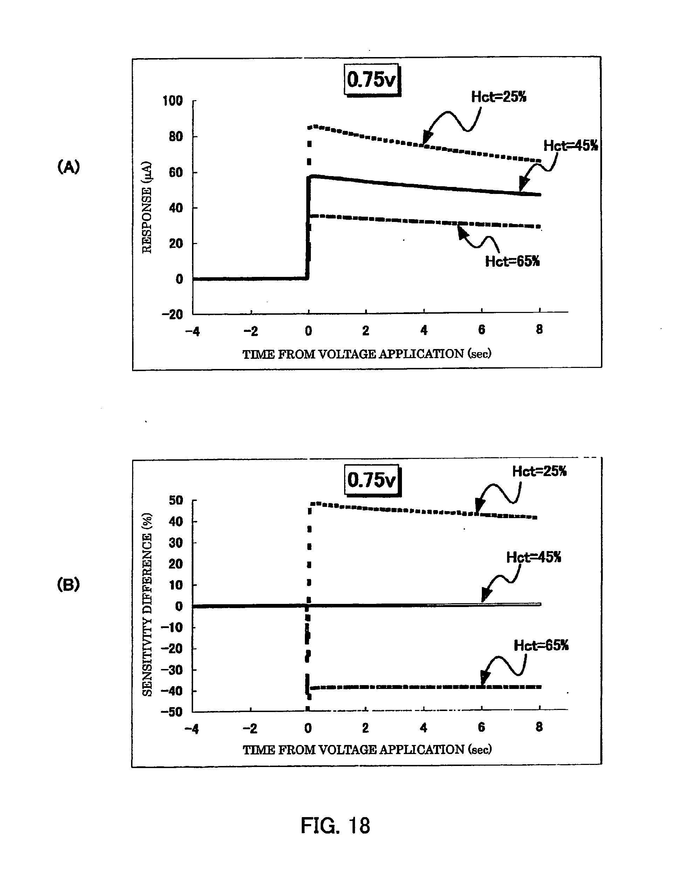

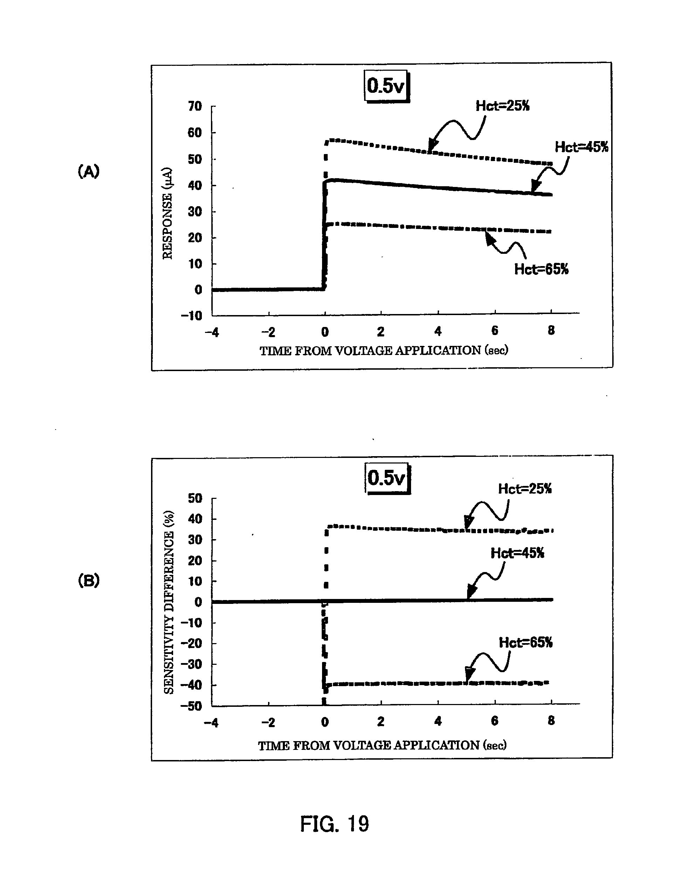

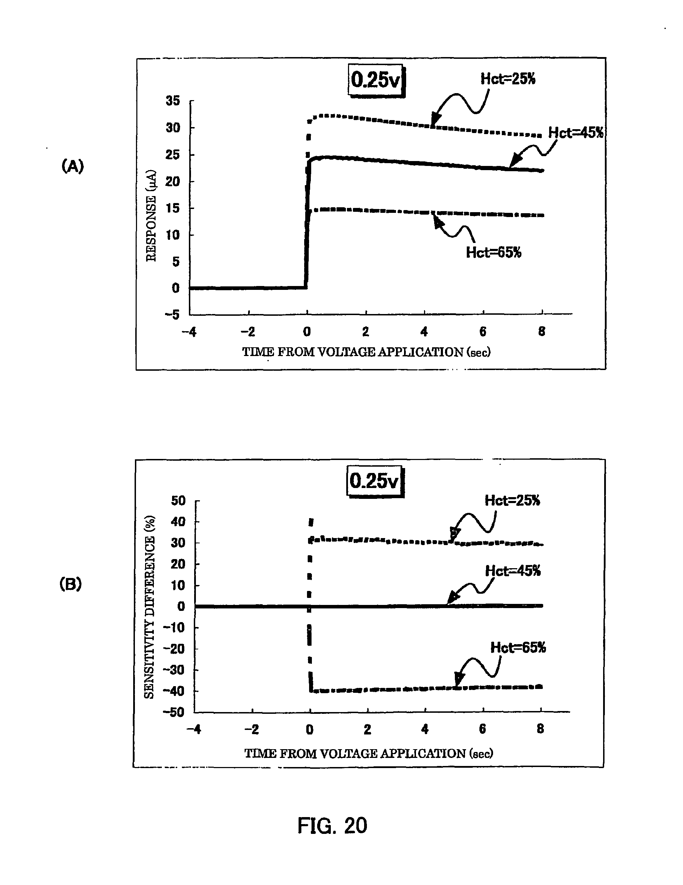

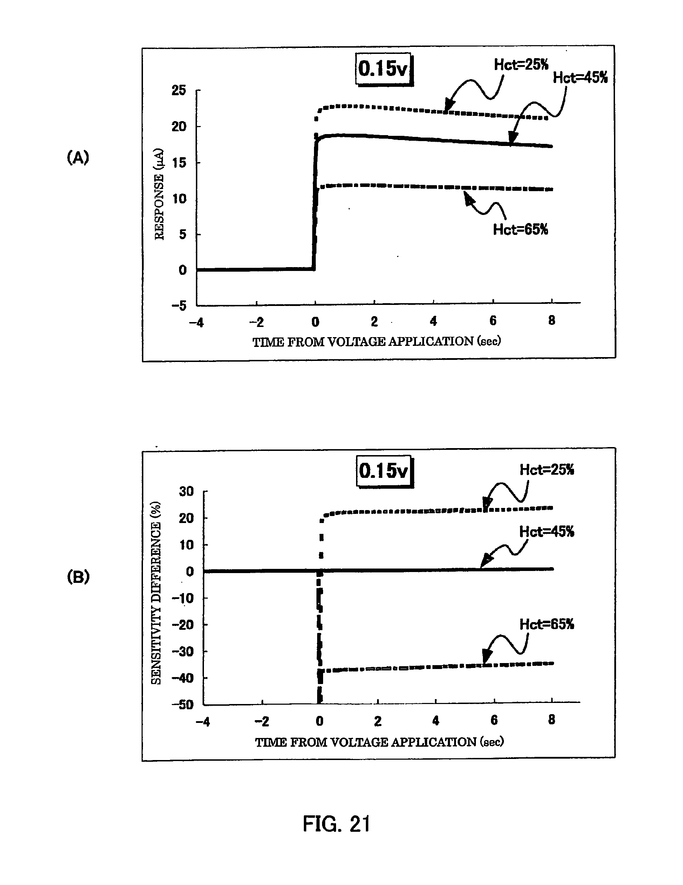

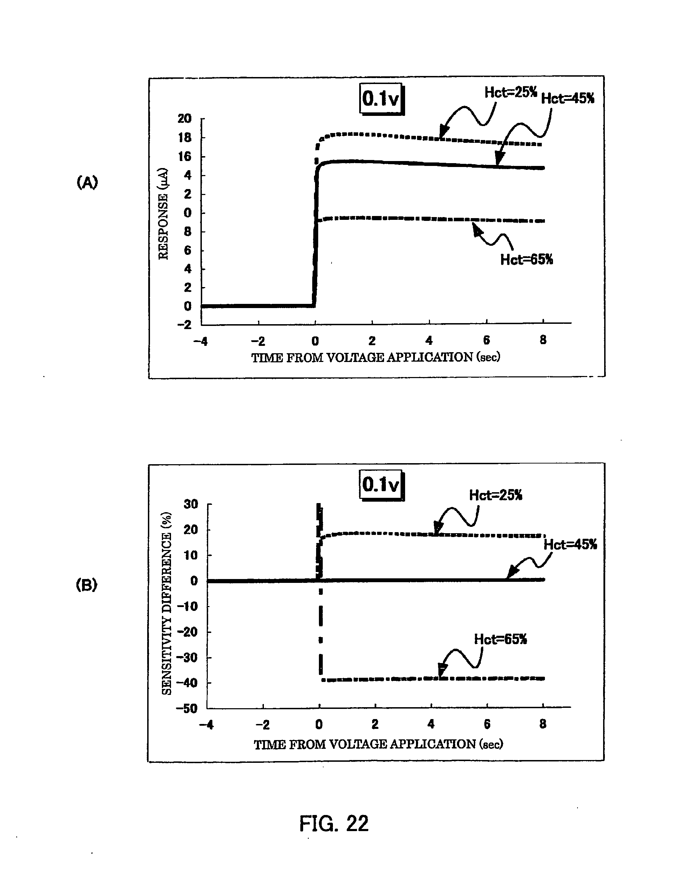

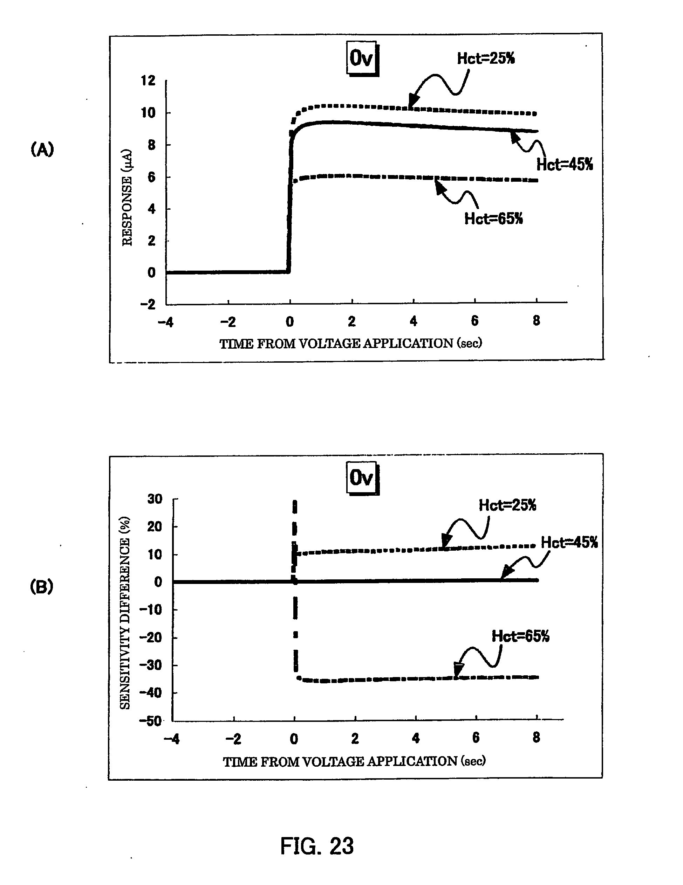

A sensor chip was prepared as in Example 1, except that the electrode core of the counter electrode was formed using carbon paste (ACHESON LTD.). Each of the three kinds of blood samples was introduced into the blood sample holder of the sensor chip, and a voltage of 3.0 V or less was applied across the working electrode and the counter electrode serving as the anode and the cathode, respectively. A resulting response current flown between the working electrode and the counter electrode was measured. The results of measurement of response current are represented by the graphs shown in FIGS. 14 through 23. As shown in the graphs, the sensor chip of Example 2 was able to detect response currents reflecting the Hct values of the blood samples with a stable and distinct sensitivity difference, immediately after the application of a voltage of 3.0 V or less across the working electrode and the counter electrode serving as the anode and the cathode, respectively.

### (Example 3)

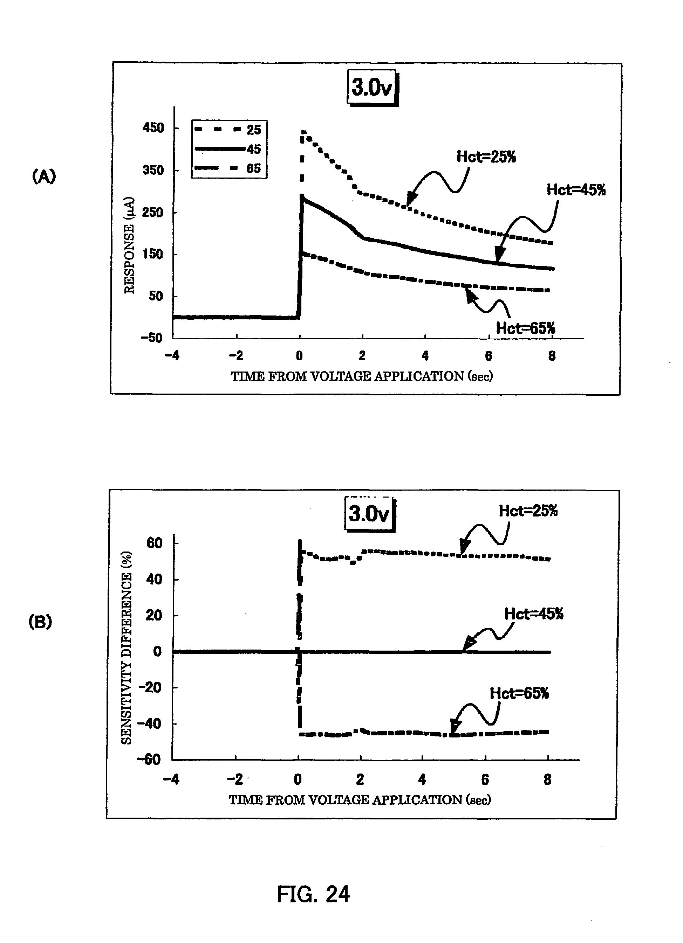

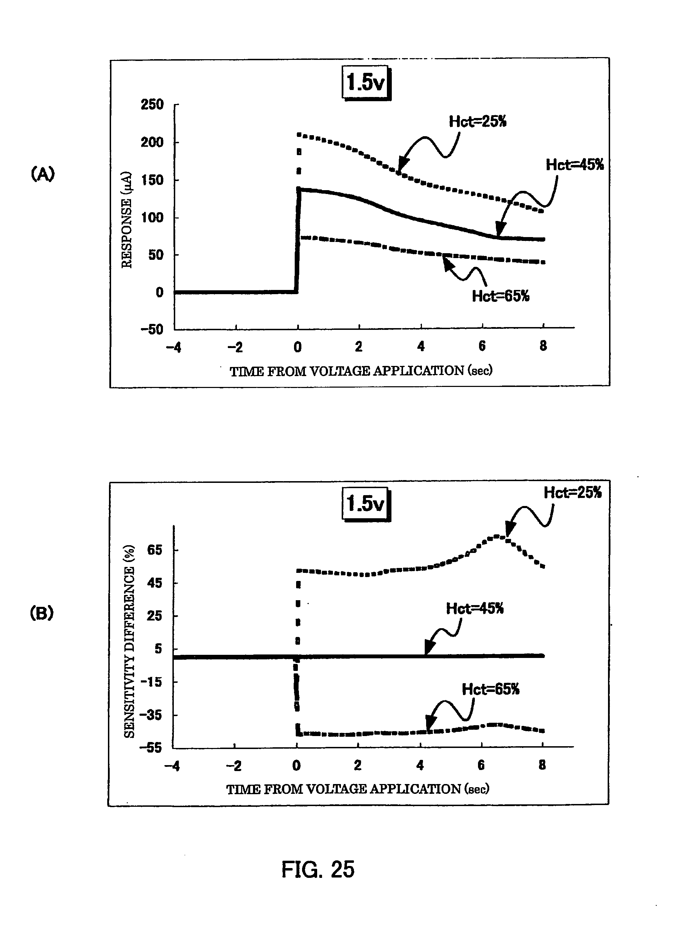

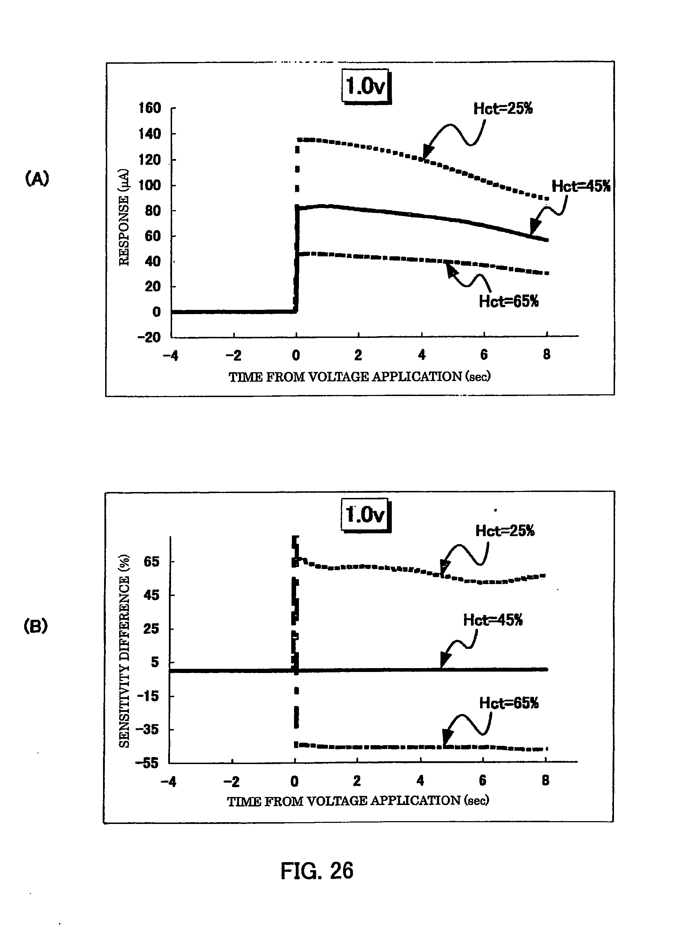

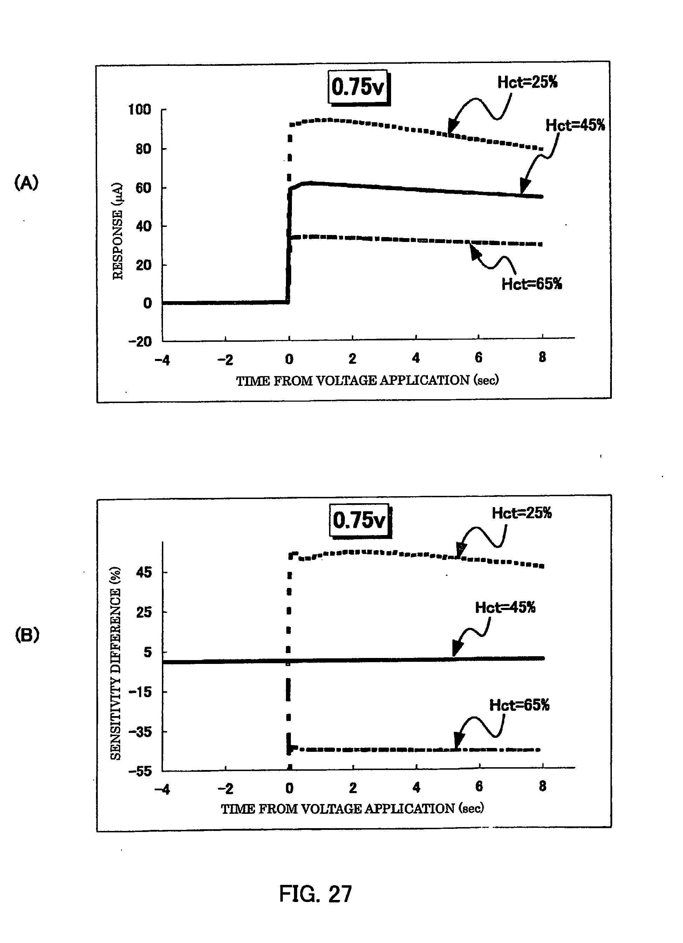

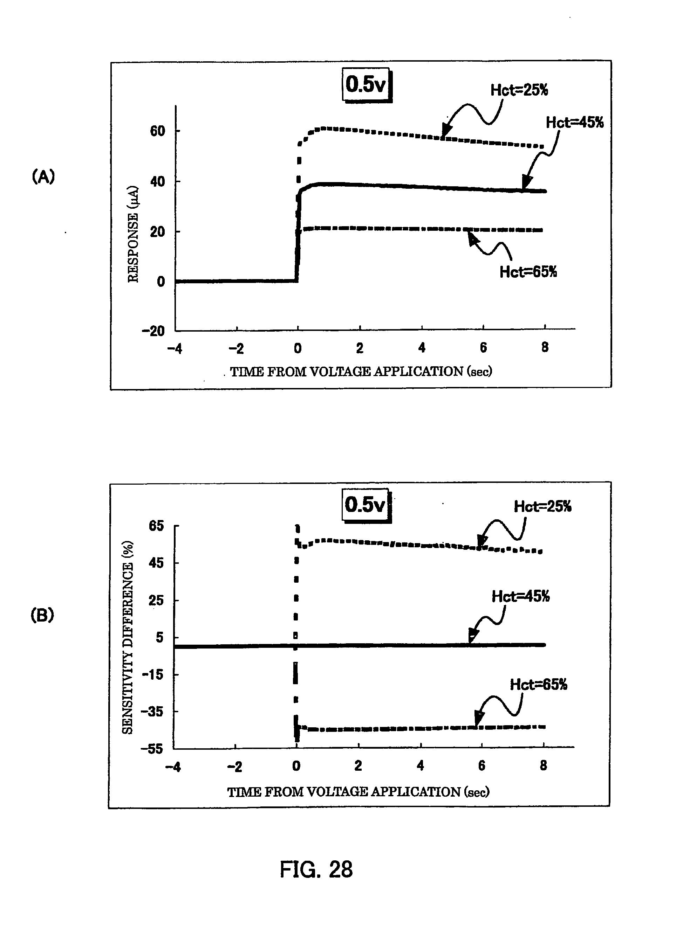

A sensor chip was prepared as in Example 1, except that a 2.5 µL-volume blood sample holder was formed using a spacer having a thickness of 180 µm. Each of the three kinds of blood samples was introduced into the blood sample holder of the sensor chip, and a voltage of 3.0 V or less was applied across the working electrode and the counter electrode serving as the anode and the cathode, respectively. A resulting response current flown between the working electrode and the counter electrode was measured. The results of measurement of response current are represented by the graphs shown in FIGS. 24 through 28. As shown in the graphs, the sensor chip of Example 3 was able to detect response currents reflecting the Hct values of the blood samples with a stable and distinct sensitivity difference, immediately after the application of a voltage of 3.0 V or less across the working electrode and the counter electrode serving as the anode and the cathode, respectively.

### (Example 4)

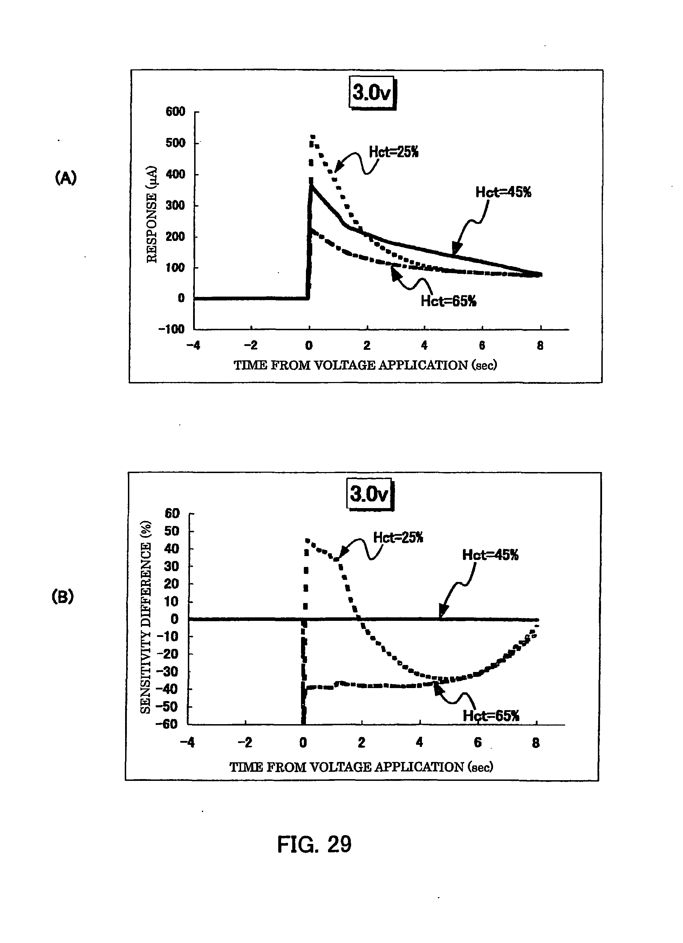

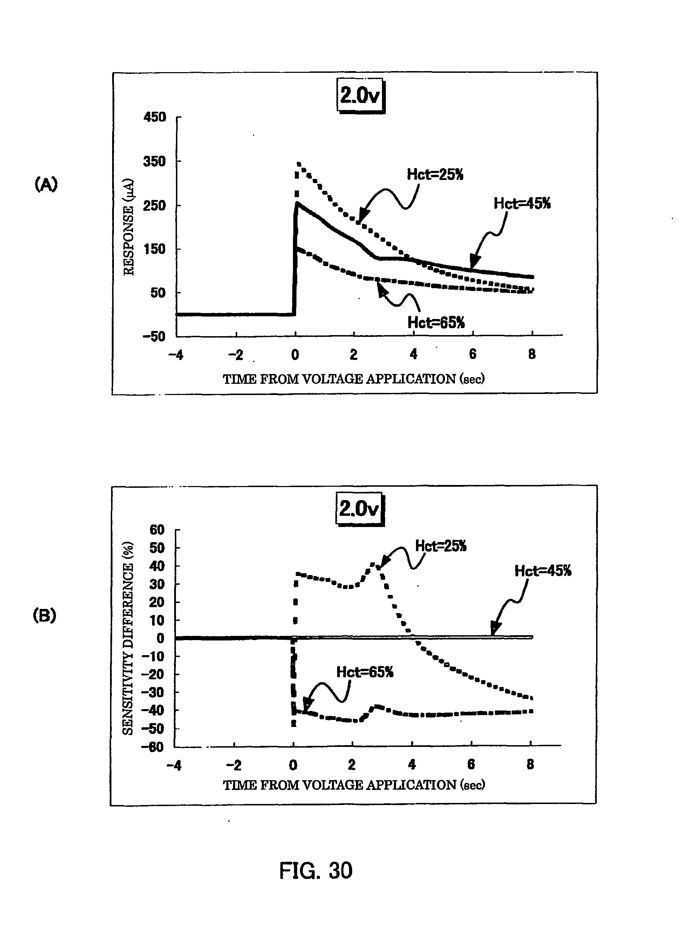

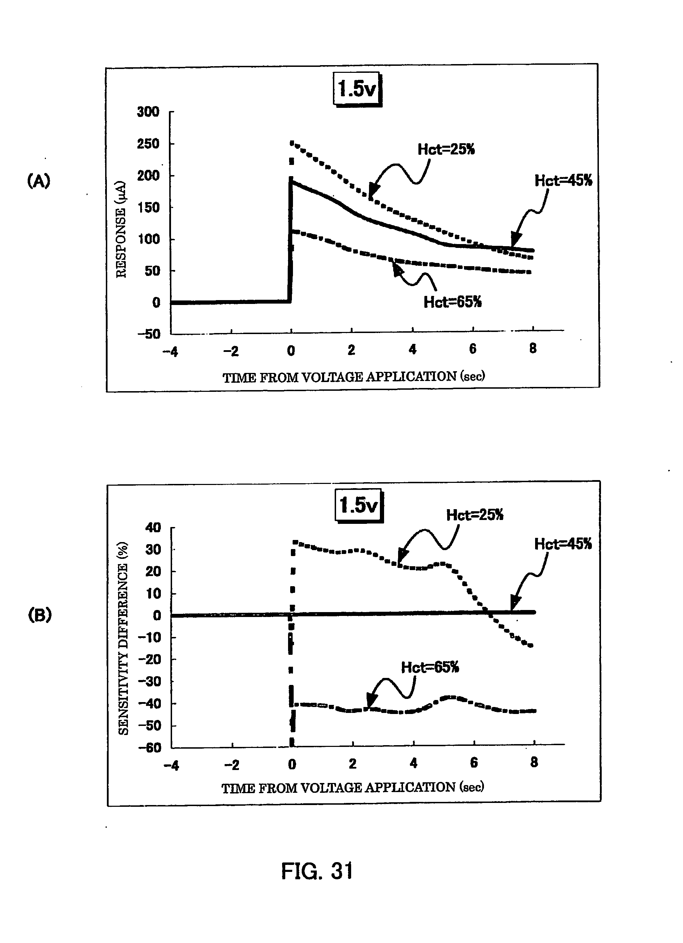

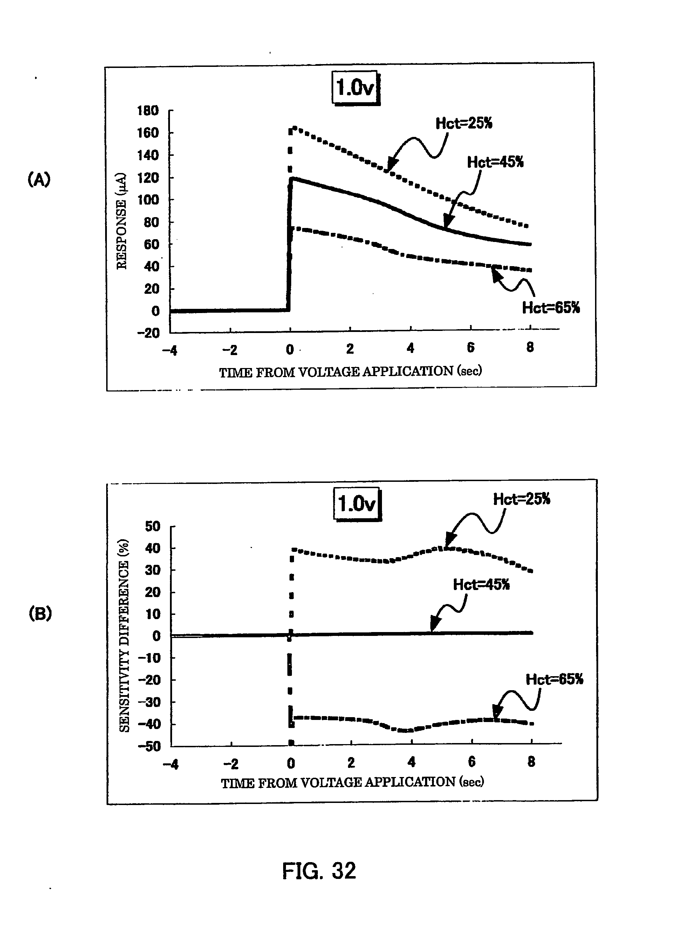

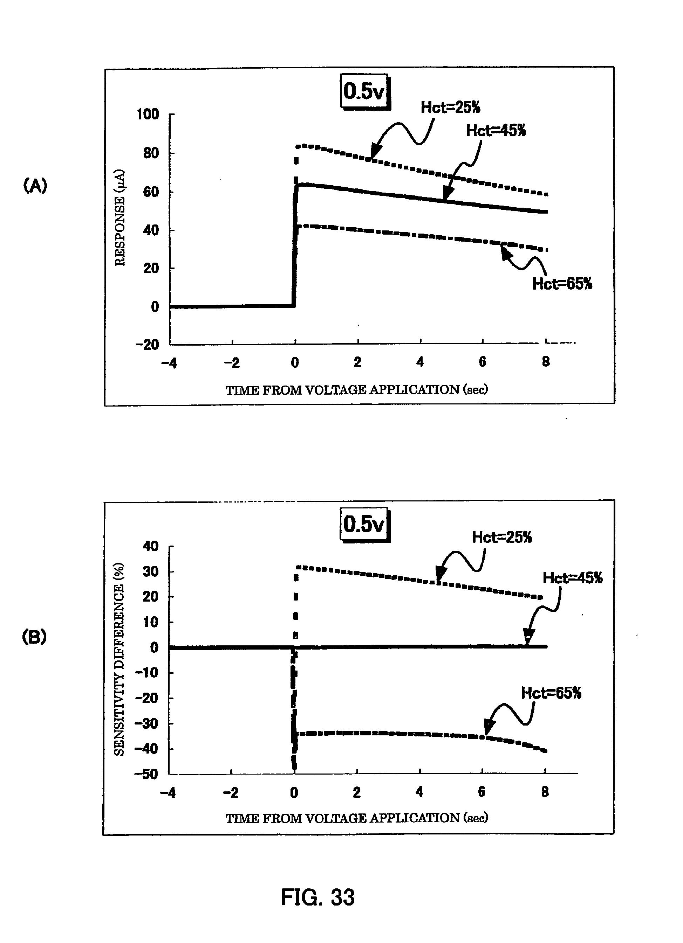

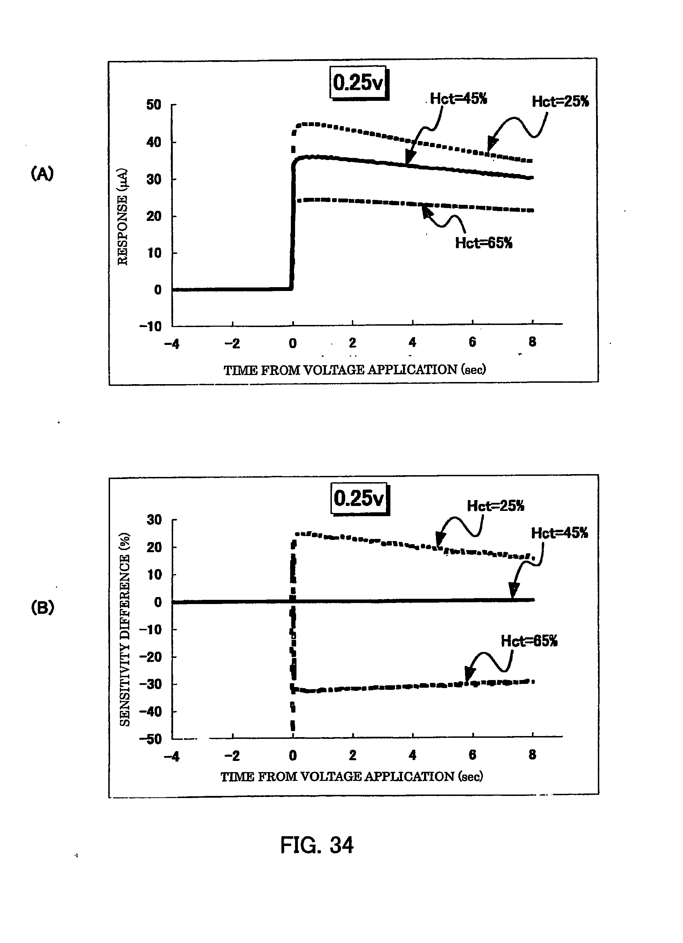

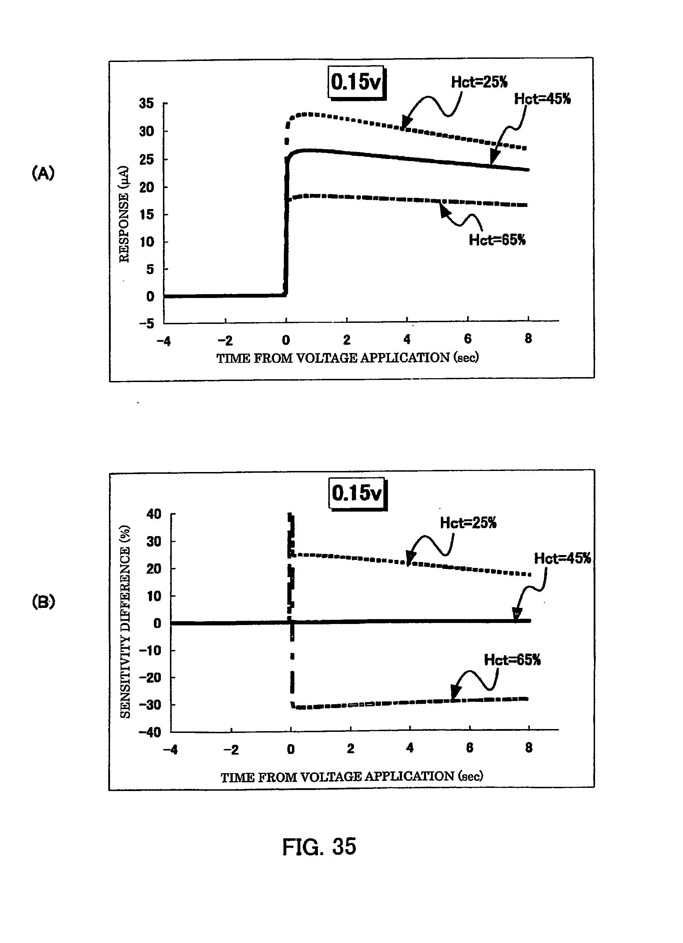

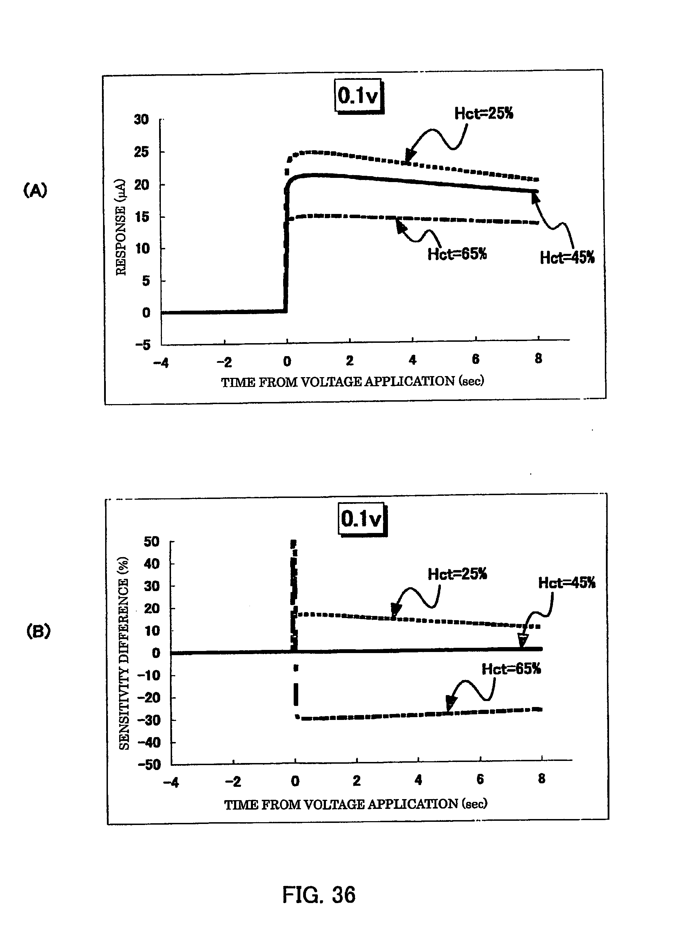

A sensor chip was prepared as in Example 2, except that a 2.3 µL-volume blood sample holder was formed using a spacer having a thickness of 260 µm. Each of the three kinds of blood samples was introduced into the blood sample holder of the sensor chip, and a voltage of 3.0 V or less was applied across the working electrode and the counter electrode serving as the anode and the cathode, respectively. A resulting response current flown between the working electrode and the counter electrode was measured. The results of measurement of response current are represented by the graphs shown in FIGS. 29 through 36. As shown in the graphs, the sensor chip of Example 4 was able to detect response currents reflecting the Hct values of the blood samples with a stable and distinct sensitivity difference, immediately after the application of a voltage of 3.0 V or less across the working electrode and the counter electrode serving as the anode and the cathode, respectively.

### (Comparative Example 1)

A conventional sensor chip was prepared. The sensor chip has the same configuration as that of the sensor chip of Example 1, except that palladium was used as a material of the electrode cores of the working electrode and the counter electrode, a CMC film was disposed on the electrode core of the working electrode so that a surface of the CMC film served as the surface of the working electrode facing the blood sample holder, and the underlayer was not provided but the reaction reagent layer was disposed on the electrode core of the counter electrode. The CMC film was disposed on the surface of the electrode core of the working electrode by dropping 0.01 to 100 mg of 0.01 to 2.0 mass% CMC aqueous solution (DAIICHI KOGYO CO., LTD.) and then by drying it. The reaction reagent layer was disposed on the surface by applying a reagent solution, prepared by dissolving 60 mM potassium ferricyanide (KANTO CHEMICAL CO., INC.) and 80 mM of taurine (NACALAI TESQUE, INC.) in a 0.1 mass% CMC aqueous solution, on the surface of the electrode core of the counter electrode (2.5 mg/sensor), and then by drying the solution at 55°C for 10 minutes.

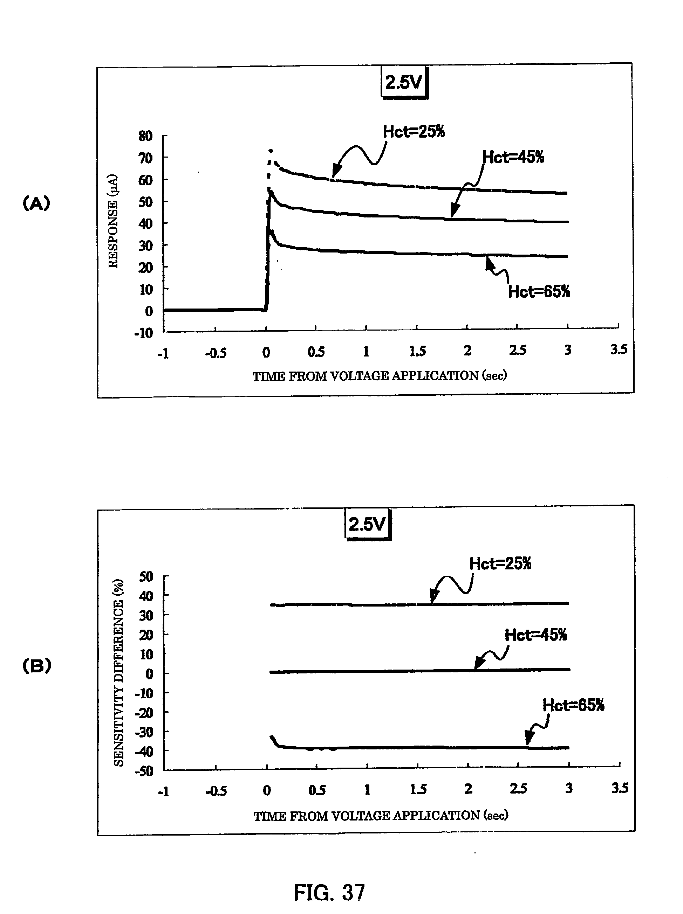

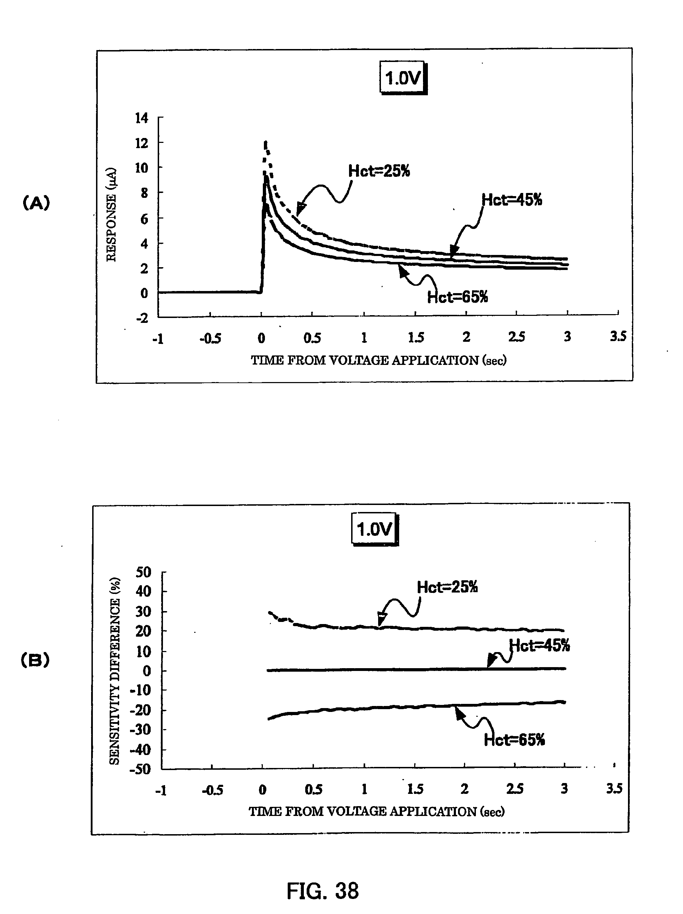

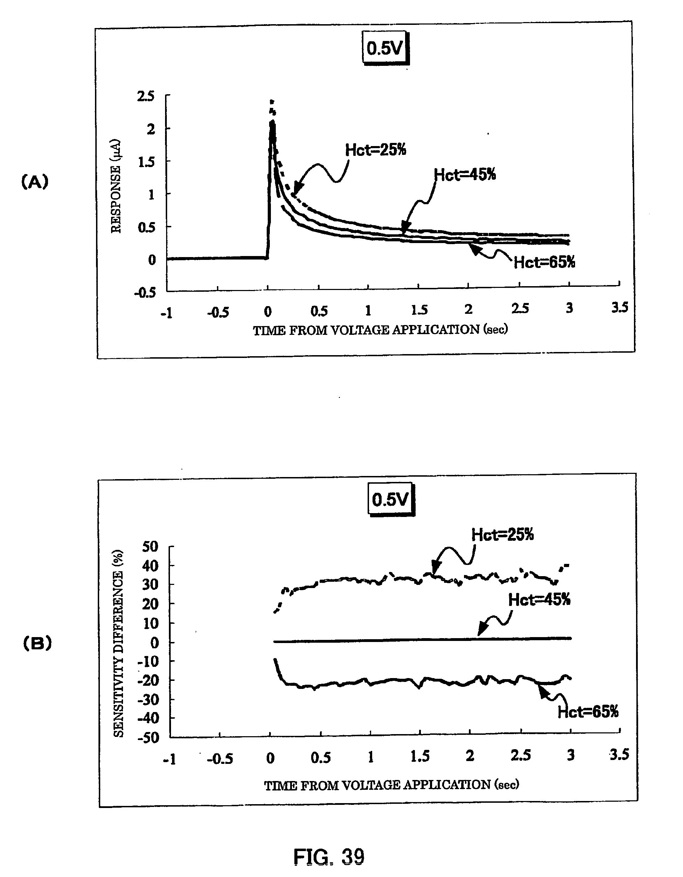

Each of the three kinds of blood samples was introduced into the blood sample holder of the sensor chip, and voltages of 2.5 V, 1.0 V, and 0.5 V were applied across the working electrode and the counter electrode serving as the anode and the cathode, respectively. A resulting response current flown between the working electrode and the counter electrode was measured. The results of measurement of response current are represented by the graphs shown in FIGS. 37 through 39. As shown in FIGS. 38 and 39, a stable sensitivity difference was not obtained in the sensor chip of Comparative Example 1 when a voltage of 1.0 V or less was applied across the working electrode and the counter electrode serving as the anode and the cathode, respectively. More specifically, as shown in FIG. 38, when a voltage of 1.0 V was applied across the working electrode and the counter electrode serving as the anode and the cathode, respectively, the sensitivity difference fluctuated abruptly immediately after the voltage application, and, though the fluctuations gradually leveled off, the sensitivity difference did not return to the normal state after three seconds from the voltage application. Further, as shown in FIG. 39, when a voltage of 0.5 V was applied across the working electrode and the counter electrode serving as the anode and the cathode, respectively, the sensitivity difference fluctuated abruptly immediately after the voltage application and continued fluctuating over a wide range. The sensitivity difference did not return to the normal state after three seconds from the voltage application.

Though the reasons for these undesirable outcomes from the sensor chip of Comparative Example 1 are unclear, it appears that the results are due to the redox current, generated by the electrolysis of water in the blood component, accounting for the majority of the redox current on the working electrode.

### (Comparative Example 2)

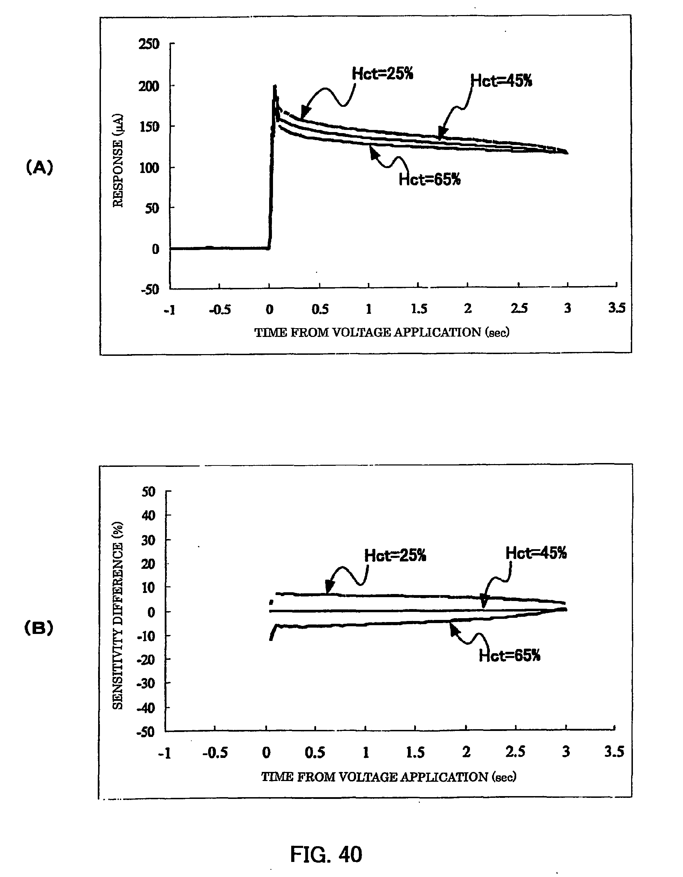

A sensor chip was prepared having the same configuration as that of the sensor chip of Comparative Example 1, except that the underlayer (CMC film) was disposed on the electrode cores of the working electrode and the counter electrode so that a surface of the CMC film served as the surfaces of the working electrode and the counter electrode facing the blood sample holder, and that the reaction reagent layer was disposed on the surfaces of the working electrode and the counter electrode. Each of the three kinds of blood samples was introduced into the blood sample holder of the sensor chip, and a voltage of 2.5 V was applied across the working electrode and the counter electrode serving as the anode and the cathode, respectively. A resulting response current flowing between the working electrode and the counter electrode was measured. The results of measurement of response current are represented by the graph shown in FIG. 40. As shown in the graph, in the sensor chip of Comparative Example 2, the sensitivity difference was small with respect to the fluctuation of the Hct value of the blood sample even a voltage of 2.5 V was applied across the working electrode and the counter electrode serving as the anode and the cathode, respectively, and the sensitivity difference did not return to the normal state after three seconds from the voltage application.

Separately, measurements of response current were made as in Examples 1 through 4 and Comparative Examples 1 and 2, using sensor chips (1) to (6) for measuring an analyte concentration (described below), and three kinds of blood samples with 25%, 45%, and 65% Hct values, each containing 67 mg/dl of glucose. The results were similar to those obtained in the measurements of response current shown in FIGS. 7 through 40. Further, a measurement of glucose concentration in the blood sample using the sensor chips (1) through (4) for measuring an analyte concentration yielded an accurate result.

The sensor chips (1) through (6) for measuring an analyte concentration had the same configurations as the sensor chips of Examples 1 through 4 and Comparative Examples 1 and 2, respectively, except that, in the blood sample holder, a counter electrode for preliminary measurement having an effective area of 0.9 mm² was formed to provide a closest distance of 0.7 mm between the counter electrode and the counter electrode for preliminary measurement, and that the working electrode has an effective area of 0.9 mm² while the counter electrode has an effective area of 1.0 mm².

### Industrial Applicability

The present invention provides a method for measuring a Hct value of a blood sample, a method for measuring a concentration of an analyte in a blood sample, and a sensor chip and a sensor unit suited for such measurements, that are capable of stably measuring a Hct value of a blood sample with sufficient detection sensitivity even with a small Hct value measuring voltage.

## Claims

1. A method for electrochemically measuring a hematocrit value of a blood sample, the method comprising:
applying a voltage across a working electrode (11, 21) and a counter electrode (12, 22) in contact with the blood sample while an oxidant (13, 23) of a redox substance is in contact with the counter electrode (12, 22) and is not substantially in contact with the working electrode (11, 21);
detecting a resulting current flowing between the working electrode (11, 21) and the counter electrode (12, 22); and
calculating a hematocrit value of the blood sample based on the current,
**characterized in that** at least part of a surface of the working electrode (11, 21) is in contact with the blood sample and is composed of a material including metal that readily undergoes electrolytic oxidation,
wherein the voltage applied across the working electrode (11, 21) and the counter electrode (12, 22) causes reduction of the oxidant (13, 23) and oxidation of the metal that readily undergoes electrolytic oxidation, and
wherein the current is detected by measuring a current that results from the oxidation and the reduction.

2. The method according to claim 1,
wherein the voltage applied across the working electrode and the counter electrode is 3.0 V or less, when the working electrode (11, 21) is anode and the counter electrode (12, 22) is cathode.

3. The method according to claim 2, wherein the voltage is 1.0 V or less.

4. The method according to claim 3, wherein the voltage is 0.5 V or less.

5. The method according to claim 1, wherein the oxidant (13, 23) is a ferricyanide.

6. The method according to claim 1,
wherein the metal that readily undergoes electrolytic oxidation is at least one metal selected from silver, copper, and nickel.

7. A method for electrochemically measuring a concentration of an analyte in a blood sample, the method comprising:
electrochemically detecting a current A reflecting a hematocrit value of the blood sample so as to obtain data A representing the current A or an equivalent of the current A and corresponding to the hematocrit value;
electrochemically detecting a current B that results from the oxidation or reduction of the analyte in the blood sample caused, in the presence of a redox substance, by a redox enzyme that uses the analyte as a substrate, so as to obtain data B representing the current B or an equivalent of the current B; and
determining a concentration of the analyte in the blood sample based on data C obtained by correcting the data B using the data A,
wherein a voltage is applied across the working electrode (11, 21) and the counter electrode (12, 22) in contact with the blood sample while an oxidant (13, 23) of the redox substance is in contact with the counter electrode (12, 22) and is substantially not in contact with at least part of a surface of the working electrode (11, 21),
**characterized in that** the voltage causes reduction of the oxidant (13, 23) and oxidation of metal that readily undergoes electrolytic oxidation forming the at least part of the surface of the working electrode, and
wherein the current A is detected by measuring a current flowing between the working electrode (11, 21) and the counter electrode (12, 22) that results from the oxidation and the reduction.

8. A sensor chip (100a, 100b, 100c, 121, 200a, 200b) comprising a hematocrit value analyzer that electrochemically detects a current reflecting a hematocrit value of a blood sample,
wherein the hematocrit value analyzer includes: a working electrode (11, 21) and a counter electrode (12, 22); a blood sample holder (14) for holding the blood sample in contact with the working electrode (11, 21) and the counter electrode (12, 22); and a blood sample inlet (16) through which the blood sample is introduced into the blood sample holder (14)
, and
wherein an oxidant (13, 23) of a redox substance is disposed in contact with a surface (32, 42) of the counter electrode (12, 22) facing the blood sample holder (14) or is disposed in the vicinity of the surface (32, 42) of the counter electrode,
**characterized in that** at least part (31, 41) of a surface of the working electrode (11, 21) facing the blood sample holder (14) is composed of a material including metal that readily undergoes electrolytic oxidation.

9. The sensor chip (100a, 100b, 100c, 121, 200a, 200b) according to claim 8,
wherein the working electrode (11, 21) is disposed on the upstream side of the counter electrode (12, 22) with respect to a flow of a blood sample introduced from the blood sample (16) inlet to the blood sample holder (14), and the oxidant is disposed between the at least part of the surface of the working electrode (11, 21) and the surface of the counter electrode (12, 22) or is disposed in contact with the surface of the counter electrode.

10. A sensor chip (100c, 200c) according to claim 8,
wherein the blood sample holder (14) includes: an inlet portion in communication with the blood sample inlet (16); and a first and a second branch portion (28a, 28b) branching out of the inlet portion, the first branch portion (28b) facing the counter electrode (22), and the second branch portion (28a) facing the working electrode (21),
wherein at least part of a surface of the working electrode (21) facing the second branch portion (28a) is composed of a material including metal that readily undergoes electrolytic oxidation, and
wherein the oxidant (23) of a redox substance is disposed at the first branch portion (28b) while being in contact with a surface of the counter electrode (22) facing the first branch portion (28b) or while being separated from the surface of the counter electrode (22).

11. The sensor chip (100a, 100b, 100c, 121, 200a, 200b) according to claim 8 or 10, wherein the oxidant is a ferricyanide.

12. The sensor chip (100a, 100b, 100c, 121, 200a, 200b) according to claim 8 or 10,
wherein the metal that readily undergoes electrolytic oxidation is at least one metal selected from silver, copper, and nickel.

13. The sensor chip (100a, 100b, 100c, 121, 200a, 200b) according to claim 8 or 10,
further comprising a film of a water soluble polymer, wherein the film covers the at least part of the surface of the working electrode so as to isolate the at least part of the surface from outside air.

14. A sensor unit comprising: the sensor chip (100a, 100b, 100c, 121, 200a, 200b) according to claim 8 or 10; and a sensor main body (123,223) including a voltage applying circuit (110, 210) for applying a predetermined voltage across the working electrode (11, 21) and the counter electrode (12, 22),
wherein the sensor chip (100a, 100b, 100c, 121, 200a, 200b) is detachable with respect to the sensor main body (123, 223), the voltage applying circuit (110, 210) is capable of applying a predetermined voltage across the working electrode (11, 21) and the counter electrode (12, 22) with the sensor chip (100a, 100b, 100c, 121, 200a, 200b) attached to the sensor main body (123, 223), and
wherein the predetermined voltage is 3.0 V or less when the working electrode (11, 21) is anode and the counter electrode (12, 22) is cathode.

15. The sensor unit according to claim 14,
wherein the predetermined voltage is 1.0 V or less.

16. The sensor unit according to claim 15,
wherein the predetermined voltage is 0.5 V or less.

## Patentansprüche

1. Verfahren zum elektrochemischen Messen eines Hämatokritwertes einer Blutprobe, wobei das Verfahren umfasst:
Anlegen einer Spannung zwischen einer Arbeitselektrode (11, 21) und einer Gegenelektrode (12, 22) in Kontakt mit der Blutprobe, während ein Oxidans (13, 23) einer Redox-Substanz in Kontakt mit der Gegenelektrode (12, 22) und im Wesentlichen nicht in Kontakt mit der Arbeitselektrode (11, 21) steht,
Erfassen eines resultierenden Stroms, der zwischen der Arbeitselektrode (11, 21) und der Gegenelektrode (12, 22) fließt, und
Berechnen eines Hämatokritwertes der Blutprobe auf Basis des Stroms,
**gekennzeichnet dadurch, dass** wenigstens ein Teil einer Oberfläche der Arbeitselektrode (11, 21) in Kontakt mit der Blutprobe steht und aus einem Material hergestellt ist, das ein Metall umfasst, das einfach eine elektrolytische Oxidation eingeht,
wobei die Spannung, die zwischen der Arbeitselektrode (11, 21) und der Gegenelektrode (12, 22) angelegt wird, eine Reduktion des Oxidans (13, 23) und eine Oxidation des Metalls verursacht, das einfach eine elektrolytische Oxidation eingeht, und
wobei der Strom durch Messen eines Stroms erfasst wird, der aus der Oxidation und der Reduktion resultiert.

2. Verfahren nach Anspruch 1,
wobei die Spannung, die zwischen der Arbeitselektrode und der Gegenelektrode angelegt wird 3,0 V oder weniger beträgt, wenn die Arbeitselektrode (11, 21) die Anode und die Gegenelektrode (12, 22) die Kathode ist.

3. Verfahren nach Anspruch 2, wobei die Spannung 1,0 V oder weniger beträgt.

4. Verfahren nach Anspruch 3, wobei die Spannung 0,5 V oder weniger beträgt.

5. Verfahren nach Anspruch 1, wobei das Oxidans (13, 23) ein Ferricyanid ist.

6. Verfahren nach Anspruch 1,
wobei das Metall, das einfach eine elektrolytische Oxidation eingeht, wenigstens ein Metall ist, das ausgewählt ist aus Silber, Kupfer und Nickel.

7. Verfahren zum elektrochemischen Messen einer Konzentration eines Analyten in einer Blutprobe, wobei das Verfahren umfasst:
elektrochemisches Erfassen eines Stroms A, der einen Hämatokritwert der Blutprobe wiedergibt, um so Daten A zu erhalten, die den Strom A oder ein Äquivalent des Stroms A wiedergeben und dem Hämatokritwert entsprechen,
elektrochemisches Erfassen eines Stroms B, der von der Oxidation oder Reduktion des Analyten in der Blutprobe unter Anwesenheit einer Redox-Substanz verursacht wird, unter Verwendung eines Redox-Enzyms, das den Analyten als ein Substrat verwendet, um so Daten B zu erhalten, die den Strom B oder ein Äquivalent des Stroms B wiedergeben, und
Bestimmen einer Konzentration des Analyten in der Blutprobe auf Basis von Daten C, die durch Korrigieren der Daten B unter Verwendung der Daten A erhalten werden,
wobei eine Spannung zwischen der Arbeitselektrode (11, 21) und der Gegenelektrode (12, 22) in Kontakt mit der Blutprobe angelegt wird, während ein Oxidans (13, 23) der Redox-Substanz in Kontakt mit der Gegenelektrode (12, 22) steht und im Wesentlichen nicht in Kontakt mit wenigstens einem Teil einer Oberfläche der Arbeitselektrode (11, 21) steht,
**gekennzeichnet dadurch, dass** die Spannung eine Reduktion des Oxidans (13, 23) und eine Oxidation des Metalls verursacht, das einfach eine elektrolytische Oxidation eingeht und den wenigsten einen Teil der Oberfläche der Arbeitselektrode bildet, und
wobei der Strom A durch Messen eines Stroms erfasst wird, der zwischen der Arbeitselektrode (11, 21) und der Gegenelektrode (12, 22) fließt und aus der Oxidation und der Reduktion resultiert.

8. Sensorchip (100a, 100b, 100c, 121, 200a, 200b) mit einem Hämatokritwertanalysierer, der elektrochemisch einen Strom erfasst, der einen Hämatokritwert einer Blutprobe wiederspiegelt,
wobei der Hämatokritwertanalysierer umfasst:
eine Arbeitselektrode (11, 21) und eine Gegenelektrode (12, 22), einen Blutprobenhalter (14) zum Halten der Blutprobe in Kontakt mit der Arbeitselektrode (11, 21) und der Gegenelektrode (12, 22), und einen Blutprobeneinlass (16) durch den die Blutprobe in den Blutprobenhalter (14) eingebracht wird, und
wobei ein Oxidans (13, 23) einer Redox-Substanz in Kontakt mit einer Oberfläche (32, 42) der Gegenelektrode (12, 22) in Richtung des Blutprobenhalters (14) oder in der Nähe der Oberfläche (32, 42) der Gegenelektrode angeordnet ist,
**gekennzeichnet dadurch, dass** wenigstens ein Teil (31, 41) einer Oberfläche der Arbeitselektrode (11, 21) in Richtung des Blutprobenhalters (14) aus einem Material hergestellt ist, das ein Metall umfasst, das einfach eine elektrolytische Oxidation eingeht.

9. Sensorchip (100a, 100b, 100c, 121, 122, 200a, 200b) nach Anspruch 8,
wobei die Arbeitselektrode (11, 21) auf der stromaufwärtigen Seite der Gegenelektrode (12, 22) hinsichtlich eines Stroms einer Blutprobe angeordnet ist, die von dem Blutprobeneinlass (16) in den Blutprobenhalter (14) eingebracht wird, und das Oxidans zwischen dem wenigstens einen Teil der Oberfläche der Arbeitselektrode (11, 21) und der Oberfläche der Gegenelektrode (12, 22) oder in Kontakt mit der Oberfläche der Gegenelektrode angeordnet ist.

10. Sensorchip (100c, 200c) nach Anspruch 8,
wobei der Blutprobenhalter (14) umfasst:
einen Einlassabschnitt in Verbindung mit dem Blutprobeneinlass (16) und einen ersten und einen zweiten Zweigabschnitt (28a, 28b), die von dem Einlassabschnitt abzweigen, wobei der erste Zweigabschnitt (28b) der Gegenelektrode (22) gegenüberliegt und der zweite Zweigabschnitt (28a) der Arbeitselektrode (21) gegenüberliegt,
wobei wenigstens ein Teil einer Oberfläche der Arbeitselektrode (21), der dem zweiten Zweigabschnitt (28a) gegenüberliegt, aus einem Material hergestellt ist, das ein Metall aufweist, das einfach eine elektrolytische Oxidation eingeht, und
wobei das Oxidans (23) einer Redox-Substanz an dem ersten Zweigabschnitt (28b) angeordnet ist, während es in Kontakt mit einer Oberfläche der Gegenelektrode (22) ist, der dem ersten Zweigabschnitt (28b) gegenüberliegt oder während es von der Oberfläche der Gegenelektrode (22) getrennt ist.

11. Sensorchip (100a, 100b, 100c, 121, 200a, 200b) nach Anspruch 8 oder 10,
wobei das Oxidans ein Ferricyanid ist.

12. Sensorchip (100a, 100b, 100c, 121, 200a, 200b) nach Anspruch 8 oder 10,
wobei das Metall, das einfach eine elektrolytische Oxidation eingeht, wenigstens ein Metall ist, das ausgewählt ist aus Silber, Kupfer und Nickel.

13. Sensorchip (100a, 100b, 100c, 121, 200a, 200b) nach Anspruch 8 oder 10,
ferner mit einem Film eines wasserlöslichen Polymers, wobei der Film den wenigstens einen Teil der Oberfläche der Arbeitselektrode bedeckt, um so den wenigstens einen Teil der Oberfläche gegenüber Außenluft zu isolieren.

14. Sensoreinheit, mit: dem Sensorchip (100a, 100b, 100c, 121, 200a, 200b) nach Anspruch 8 oder 10 und einem Sensorhauptkörper (123, 223) mit einer Spannungsanlegeschaltung (110, 210) zum Anlegen einer vorbestimmten Spannung zwischen der Arbeitselektrode (11, 21) und der Gegenelektrode (12, 22),
wobei der Sensorchip (100a, 100b, 100c, 121, 200a, 200b) hinsichtlich des Sensorhauptkörpers (123, 223) lösbar ist, wobei die Spannungsanlegeschaltung (110, 210) dazu ausgestaltet ist, eine vorbestimmte Spannung zwischen der Arbeitselektrode (11, 21) und der Gegenelektrode (12, 22) anzulegen, wenn der Sensorchip (100a, 100b, 100c, 121, 200a, 200b) an dem Sensorhauptkörper (123, 223), angebraucht ist, und
wobei die vorbestimmte Spannung 3,0 V oder weniger beträgt, wenn die Arbeitselektrode (11, 21) eine Anode und die Gegenelektrode (12, 22) eine Kathode ist.

15. Sensoreinheit nach Anspruch 14,
wobei die vorbestimmte Spannung 1,0 V oder weniger beträgt.

16. Sensoreinheit nach Anspruch 15,
wobei die vorbestimmte Spannung 0,5 V oder weniger beträgt.

## Revendications

1. Procédé destiné à une mesure électrochimique d'une valeur d'hématocrite d'un échantillon de sang, le procédé comprenant le fait :
d'appliquer une tension à travers une électrode de travail (11, 21) et une contre-électrode (12, 22) en contact avec l'échantillon de sang tandis qu'un oxydant (13, 23) d'une substance redox est en contact avec la contre-électrode (12, 22) et n'est pas essentiellement en contact avec l'électrode de travail (11, 21) ;
de détecter un courant résultant qui circule entre l'électrode de travail (11, 21) et la contre-électrode (12, 22) ; et
de calculer une valeur d'hématocrite de l'échantillon de sang sur la base du courant,
**caractérisé en ce qu'**au moins une partie d'une surface de l'électrode de travail (11, 21) est en contact avec l'échantillon de sang et est composée d'un matériau comportant un métal qui subit facilement une oxydation électrolytique,
où la tension appliquée à travers l'électrode de travail (11, 21) et la contre-électrode (12, 22) provoque la réduction de l'oxydant (13, 23) et l'oxydation du métal qui subit facilement une oxydation électrolytique, et
où le courant est détecté par mesure d'un courant qui résulte de l'oxydation et de la réduction.

2. Procédé selon la revendication 1,
dans lequel la tension appliquée à travers l'électrode de travail et la contre-électrode est de 3,0 V ou moins, lorsque l'électrode de travail (11, 21) est l'anode et la contre-électrode (12, 22) est la cathode.

3. Procédé selon la revendication 2, dans lequel la tension est de 1,0 V ou moins.

4. Procédé selon la revendication 3, dans lequel la tension est de 0,5 V ou moins.

5. Procédé selon la revendication 1, dans lequel l'oxydant (13, 23) est un ferricyanure.

6. Procédé selon la revendication 1,
dans lequel le métal qui subit facilement une oxydation électrolytique est au moins un métal choisi parmi l'argent, le cuivre et le nickel.

7. Procédé destiné à une mesure électrochimique d'une concentration d'un analyte dans un échantillon de sang, le procédé comprenant le fait :
de détecter de façon électrochimique un courant A reflétant une valeur d'hématocrite de l'échantillon de sang afin d'obtenir des données A représentant le courant A ou un équivalent du courant A et correspondant à la valeur d'hématocrite ;
de détecter de façon électrochimique un courant B qui résulte de l'oxydation ou de la réduction de l'analyte dans l'échantillon de sang provoquée, en présence d'une substance redox, par une enzyme redox qui utilise l'analyte en tant que substrat, afin d'obtenir des données B représentant le courant B ou un équivalent du courant B ; et
de déterminer une concentration de l'analyte dans l'échantillon de sang sur la base de données C obtenues en corrigeant les données B en utilisant les données A,
où une tension est appliquée à travers l'électrode de travail (11, 21) et la contre-électrode (12, 22) en contact avec l'échantillon de sang tandis qu'un oxydant (13, 23) de la substance redox est en contact avec la contre-électrode (12, 22) et n'est pas essentiellement en contact avec au moins une partie d'une surface de l'électrode de travail (11, 21),
**caractérisé en ce que** la tension provoque la réduction de l'oxydant (13, 23) et l'oxydation d'un métal qui subit facilement une oxydation électrolytique formant l'au moins une partie de la surface de l'électrode de travail, et
où le courant A est détecté par mesure d'un courant circulant entre l'électrode de travail (11, 21) et la contre-électrode (12, 22) qui résulte de l'oxydation et de la réduction.

8. Puce de détecteur (100a, 100b, 100c, 121, 200a, 200b) comprenant un analyseur de valeur d'hématocrite qui détecte de façon électrochimique un courant reflétant une valeur d'hématocrite d'un échantillon de sang,
où l'analyseur de valeur d'hématocrite comporte : une électrode de travail (11, 21) et une contre-électrode (12, 22) ; un porte-échantillon de sang (14) destiné à maintenir l'échantillon de sang en contact avec l'électrode de travail (11, 21) et la contre-électrode (12, 22) ; et une entrée d'échantillon de sang (16) à travers laquelle l'échantillon de sang est introduit dans le porte-échantillon de sang (14), et
où un oxydant (13, 23) d'une substance redox est disposé en contact avec une surface (32, 42) de la contre-électrode (12, 22) faisant face au porte-échantillon de sang (14) ou est disposé à proximité de la surface (32, 42) de la contre-électrode,
**caractérisée en ce qu'**au moins une partie (31, 41) d'une surface de l'électrode de travail (11, 21) faisant face au porte-échantillon de sang (14) est composée d'un matériau comportant un métal qui subit facilement une oxydation électrolytique.

9. Puce de détecteur (100a, 100b, 100c, 121, 200a, 200b) selon la revendication 8,
dans laquelle l'électrode de travail (11, 21) est disposée sur le côté amont de la contre-électrode (12, 22) par rapport à un écoulement d'un échantillon de sang introduit à partir de l'entrée d'échantillon de sang (16) vers le porte-échantillon de sang (14), et l'oxydant est disposé entre l'au moins une partie de la surface de l'électrode de travail (11, 21) et la surface de la contre-électrode (12, 22) ou est disposé en contact avec la surface de la contre-électrode.

10. Puce de détecteur (100c, 200c) selon la revendication 8,
dans laquelle le porte-échantillon de sang (14) comporte : une partie d'entrée en communication avec l'entrée d'échantillon de sang (16) ; et des première et deuxième parties de ramification (28a, 28b) s'étendant de la partie d'entrée, la première partie de ramification (28b) faisant face à la contre-électrode (22), et la deuxième partie de ramification (28a) faisant face à l'électrode de travail (21),
dans laquelle au moins une partie d'une surface de l'électrode de travail (21) faisant face à la deuxième partie de ramification (28a) est composée d'un matériau comportant un métal qui subit facilement une oxydation électrolytique, et
dans laquelle l'oxydant (23) d'une substance redox est disposé au niveau de la première partie de ramification (28b) tout en étant en contact avec une surface de la contre-électrode (22) faisant face à la première partie de ramification (28b) ou tout en étant séparé de la surface de la contre-électrode (22).

11. Puce de détecteur (100a, 100b, 100c, 121, 200a, 200b) selon la revendication 8 ou 10, dans laquelle l'oxydant est un ferricyanure.

12. Puce de détecteur (100a, 100b, 100c, 121, 200a, 200b) selon la revendication 8 ou 10,
dans laquelle le métal qui subit facilement une oxydation électrolytique est au moins un métal choisi parmi l'argent, le cuivre et le nickel.

13. Puce de détecteur (100a, 100b, 100c, 121, 200a, 200b) selon la revendication 8 ou 10,
comprenant en outre un film d'un polymère soluble dans l'eau, où le film couvre l'au moins une partie de la surface de l'électrode de travail afin d'isoler l'au moins une partie de la surface de l'air extérieur.

14. Unité de détecteur comprenant : la puce de détecteur (100a, 100b, 100c, 121, 200a, 200b) selon la revendication 8 ou 10 ; et un corps principal de détecteur (123, 223) comportant un circuit d'application de tension (110, 210) destiné à appliquer une tension prédéterminée à travers l'électrode de travail (11, 21) et la contre-électrode (12, 22),
où la puce de détecteur (100a, 100b, 100c, 121, 200a, 200b) est amovible par rapport au corps principal de détecteur (123, 223), le circuit d'application de tension (110, 210) est capable d'appliquer une tension prédéterminée à travers l'électrode de travail (11, 21) et la contre-électrode (12, 22) avec la puce de détecteur (100a, 100b, 100c, 121, 200a, 200b) fixée au corps principal de détecteur (123, 223), et
où la tension prédéterminée est de 3,0 V ou moins lorsque l'électrode de travail (11, 21) est l'anode et la contre-électrode (12, 22) est la cathode.

15. Unité de détecteur selon la revendication 14,
dans laquelle la tension prédéterminée est de 1,0 V ou moins.

16. Unité de détecteur selon la revendication 15,
dans laquelle la tension prédéterminée est de 0,5 V ou moins.
